Europäisches Patentamt

European Patent Office

Office européen des brevets

(11) Veröffentlichungsnummer: **0 276 454 B1**

# EUROPÄISCHE PATENTSCHRIFT

(45) Veröffentlichungstag der Patentschrift: **09.06.93**

(21) Anmeldenummer: **87118862.9**

(22) Anmeldetag: **18.12.87**

(51) Int. Cl.⁵: **F41G  5/08**, G01S 13/66, G01S 13/87

## (54) Zielverfolgungssystem.

(30) Priorität: **22.12.86 CH 5216/86**

(43) Veröffentlichungstag der Anmeldung:
**03.08.88 Patentblatt  88/31**

(45) Bekanntmachung des Hinweises auf die
Patenterteilung:
**09.06.93 Patentblatt  93/23**

(84) Benannte Vertragsstaaten:
**AT BE CH DE ES FR GB GR IT LI LU NL SE**

(56) Entgegenhaltungen:
EP-A- 0 207 521          WO-A-81/00149
DE-A- 3 004 633          DE-A- 3 303 888
DE-B- 1 165 459          US-A- 3 307 180
US-A- 4 179 696          US-A- 4 320 287

**IEEE TRANSACTIONS ON AUTOMATIC CON-
TROL, Band AC-28, Nr. 3, März 1983, Seiten
294-304, IEEE, New York, US; R.F. BERG:
"Estimation and prediction for maneuvering
target trajectories"**

(73) Patentinhaber: **Oerlikon-Contraves AG
Schaffhauserstrasse 580
CH-8052 Zürich(CH)**

(72) Erfinder: **Piccolruaz, Heinz
Loowiesenstrasse 63 Sonnhalde Adlikon
CH-8106 Regensdorf(CH)**

(74) Vertreter: **Körber, Wolfhart, Dr.rer.nat. et al
Patentanwälte Mitscherlich & Partner, Sonnenstrasse 33, Postfach 33 06 09
W-8000 München 33 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Zielverfolgungssystem mit mindestens einem Winkelsensor zur Vermessung der winkelmässigen Ablage des Ziels von der jeweiligen Visierlinie der Antenne des Winkelsensors, mit mindestens einem Distanzsensor zur Messung der Entfernung zwischen Ziel und besagtem Distanzsensor und mit einem Servo zur dauernden Ausrichtung der Antennen der erwähnten Zielsensoren auf das Ziel so, dass das Ziel dauernd im Sendebereich bzw. Empfangsbereich dieser Zielsensoren liegt, mit einem Servoestimator zur Schätzung des Bewegungszustandes des Servos mit Hilfe eines Lagesensorsignals, wobei der Servoestimator ein Modell des Servos ist, mit einem Zielestimator zur Schätzung des Bewegungszustandes des Ziels aufgrund des Lagesensorsignals sowie der Zielsensorsignale aller Zielsensoren, wobei der Zielestimator ein Modell der Zielbewegung ist, und mit einem Regler zur gleichartigen Steuerung von Servo und Servoestimator durch ein gemeinsames Steuersignal, wobei der Regler das inverse System zum Rest des Zielverfolgungssystems ist.

1. Hintergrund der Erfindung

Solche Zielverfolgungssysteme werden vor allem zur zeitlich-räumlichen Vermessung und Extrapolation der Flugbahnen von zivilen und militärischen Flugobjekten innerhalb der Atmosphäre benötigt. Die verfolgten bzw. vermessenen Objekte können sich aber auch im Weltraum bewegen, oder auf der Erdoberfläche, auf dem Land oder auf dem Wasser und sogar unter Wasser.

Bei den zivilen Anwendungen geht es zumeist darum, die Kollision zweier Objekte (z.B. Verkehrsflugzeuge) zu vermeiden. Bei den militärischen Anwendungen hingegen geht es zumeist darum, die Kollision zweier Objekte (z.B. Geschoss und Ziel) herbei zu führen.

Zu diesem Zweck müssen die Objekte möglichst genau und zuverlässig verfolgt und vermessen werden, denn die Extrapolation einer Flugbahn kann nicht besser sein als ihre Verfolgung und Vermessung.

Deshalb verwendet man oft mehrere Zielsensoren mit gemeinsamem oder zumindest überlappendem Messbereich zur Verfolgung und Vermessung eines einzigen Objekts bzw. Ziels. Fortan sei vorausgesetzt, dass pro Zielverfolgungssystem nur ein Ziel zu verfolgen ist.

Verfolgung bedeutet, dass die Zielsensoren bzw. ihre Antennen durch ein Servosystem so bewegt werden, dass das Ziel sich möglichst dauernd in ihrem Messbereich befindet. Nur so kann das Ziel bzw. seine Flugbahn gut vermessen werden, und nur so kann es hinwiederum gut verfolgt werden. Somit hängen Verfolgung und Vermessung in ihrer Qualität wechselseitig voneinander ab.

Die Zielsensoren (senden und) empfangen meistens elektromagnetische Wellen mit einer Wellenlänge zwischen $10^{-7}$ m und $10^{-1}$ m. Es werden aber auch akustische Wellen verwendet, vor allem unter Wasser. In der Luft breiten sich akustische Wellen etwa eine Million $= 10^6$ mal langsamer aus als elektromagnetische Wellen. Die Messbereiche der Zielsensoren sind meistens schlank und ihre Mittel-Linie wird fortan "Visierlinie" genannt. Visierlinien müssen nicht unbedingt gerade sein. Sie sind z.B. dann gekrümmt, wenn akustische Wellen Luftschichten durchqueren, deren Lufttemperaturen und/oder Windgeschwindigkeiten verschieden sind.

Distanzsensoren messen die Distanz d zwischen Sensor und Ziel zumeist anhand der Laufzeit der Wellen vom Sensor zum Ziel und zurück. Dann müssen sie aktiv sein, d.h. die Wellen selber aussenden. Die Visierlinien von Sender und Empfänger dieser Wellen müssen unabhängig voneinander bewegt werden können, wenn das Ziel sich nicht viel langsamer bewegt als die Wellen.

Winkelsensoren hingegen messen die winkelmässige Ablage a des Ziels von ihrer Visierlinie und können auch passiv sein, d.h. Wellen empfangen, die von fremden Quellen ausgehen, z.B. von der Sonne oder vom Ziel selbst. Das Verhältnis der Wellenlänge zur Grösse der Antenne, welche die Wellen empfängt und ev. auch aussendet, hat grossen Einfluss auf die Schlankheit des Messbereichs bzw. die Richtwirkung der Zielsensoren und damit insbesondere auf die Genauigkeit der Winkelsensoren. Diese Richtwirkung wird auch benötigt, um den Energiebedarf der aktiven Zielsensoren klein zu halten. Das bedeutet, vor allem bei langen Wellen, dass schwere Antennen bzw. ihre Visierlinien dem Ziel präzis nachgeführt werden müssen. Die Ungenauigkeit dieser Nachführung wird oft auch Verfolgungsfehler genannt und beeinträchtigt die Genauigkeit der Zielsensoren, was wiederum den Verfolgungsfehler vergrössert usw..

Nach dem Grundprinzip gemäß der älteren EP-A 0207521 der Anmelderin wird erreicht, dass das Ziel (genauer gesagt: der Rückstrahlschwerpunkt des Zieles) genau vermessen und benachbarte Ziele oder das Ziel und sein Spiegelbild sauber auseinander gehalten werden können. Dabei ist wichtig, dass die Signale der Sensoren so verarbeitet und dem Servosystem zugeführt werden, dass dieses die gemeinsame Visierlinie der Zielsensoren möglichst zuverlässig und genau auf das Ziel gerichtet hält. Insbesondere soll die Wahrscheinlichkeit maximal werden, dass das Ziel sich dauernd im Messbereich der Zielsensoren befindet, dass also die bisherigen Messwerte der Sensoren das Servosystem so steuern, dass kein zukünftiger Messwert durch Verfolgungsfehler verloren geht. Dabei kann auch noch die Belastung des Servosystems (z.B. Abnutzung, Erwärmung u.s.w.) mit berücksichtigt und minimiert werden.

Aus der US-A-4,179,696 ist ein Radar-Nachführsystem mit einem Kalman-Estimator bekannt. Dieser Estimator umfaßt Winkel- und Abstands-Fehler-Messungen. Es ist Bezug genommen auf ein Koordinatensystem, das ausgerichtet und normal zur Visierlinie der Antenne ist. Die Zielsetzung dieses bekannten Systems ist, weniger Computer-Aufwand im Umsetzen der Meßwerte zu benötigen. Es ist dort eine Multiplizierschaltung 38 vorgesehen, die einen skalaren Restwert Delta R mit einem skalaren Verstärkungsfaktor des Estimators multipliziert. Das sich ergebende skalara Produkt wird der Transformationsschaltung 42 zugeführt. Der Rest Delta R ist dabei der Unterschied zwischen gemessenem und abgeschätztem Wert des Abstands des Zielobjekts.

Aufgabe der Erfindung ist es, ein im Sinne des vorstehenden Abschnittes optimales Zielverfolgungssystem mit maximaler Verfolgungssicherheit und minimaler Servobelastung zu schaffen.

## 2. Lösungsprinzip

Distanzsensoren und Winkelsensoren mit gerader Visierlinie messen die Position des Ziels relativ zu einem zielsensorfesten Polarkoordinatensystem mit Ursprung im Sensor, welches durch den Sensorservo winkelmässig dem Ziel nachgeführt wird. Da die Bewegung des Ziels (und des Servos) (relativ zu einem inertiellen Koordinatensystem) den Gesetzen der Newtonschen Mechanik gehorcht, lässt sie sich in einem inertiellen Koordinatensystem (Inertialsystem) besonders einfach beschreiben. Diese inertielle bzw. absolute Bewegung des Ziels im Inertialsystem setzt sich zusammen aus der Relativbewegung des Ziels zum zielsensorfesten Polarkoordinatensystem und der Bewegung dieses Polarkoordinatensystems relativ zum Inertialsystem. Letztere Bewegung wird durch Lagesensoren gemessen (welche man auch "Servosensoren" nennen könnte). Dazu gehören die Sensorservo-Coder, welche das Codersignal als Teil des Lagesensorsignals c erzeugen, das eine Messung zumindest der Position der Drehachsen des Sensorservos relativ zueinander bzw. relativ zu einer Plattform darstellt. Das genügt, wenn der Sensorservo auf einer Plattform ruht, die sich (nur) inertiell bewegt. Das ist aber - genau genommen - nie der Fall. Oft ist die Plattform auf einem Fahrzeug montiert, z.B. einem Flugzeug oder Panzer oder Ueberwasserschiff oder Unterseeboot. Auch unser Planet bewegt sich nicht (nur) inertiell, sondern er dreht sich um die Achse, die seine Pole verbindet. Sind die nichtinertiellen Bewegungen der Plattform wesentlich, so müssen sie auch durch Lagesensoren gemessen werden, z.B. durch eine sogenannte Referenzanlage (welche primär nicht Winkelpositionen, sondern Winkelgeschwindigkeiten liefert). Systemtheoretisch empfiehlt sich die Annahme, dass die Bewegung der Plattform durch einen (imaginären) "Plattform-Servo" erzeugt werde, der nur durch unbekannte Zufalls-Signale gesteuert wird. Im Gegensatz dazu wird der eigentliche Sensorservo (direkt oder indirekt) durch die Sensorsignale a, d und c gesteuert. Dabei muss der Sensorservo zwischen den Bewegungen der Plattform und des Ziels so vermitteln, dass die Visierlinie der Zielsensoren dauernd durch das Ziel geht. Schliesslich kann man "Plattformservo" und Sensorservo gedanklich zu einem "Kombiservo" zusammenfassen, von dem die Motoren der "unteren" Drehachsen durch Zufallssignale und jene der "oberen" Drehachsen durch Sensorsignale gesteuert werden, während die Position aller Drehachsen durch Lagesensoren gemessen wird. Diese Lagesensorsignale (auch jene der Referenzanlage) seien im (vektoriellen) Lagesensorsignal c zusammengefasst. Andererseits seien die Signale d und a der Distanz-und Winkelsensoren als Zielsensorsignale bezeichnet.

Fortan ist unter "Servo" S eine Kombination von "Teilservos" Si zu verstehen, von denen jeder je eine Visierlinie bewegt und ein Kombiservo im obigen Sinne ist, wobei die Plattformen dieser Teilservos Si identisch, gekoppelt oder völlig unabhängig und auch räumlich weit voneinander entfernt sein können. Letzteres erfordert nicht nur rotatorische, sondern auch translatorische Lagesensoren. Andererseits kann auch der Zielsensorträger des einen Teilservos Si als Plattform für einen andern Teilservo Sj dienen.

Die am Schluss von Abschnitt 1 definierte Aufgabe wird im wesentlichen durch die nachfolgend beschriebenen 4 Funktionsblöcke gelöst, nämlich Multiplikator Mui, Zielestimator Ze, Regler R und Servoestimator Se. Dabei wird immer vorausgesetzt, dass alle Fehler und Störungen mittelwertfrei seien. Diese Voraussetzung kann man bekanntlich erfüllen, indem man allfällige Mittelwerte schätzt und abzieht.

### 2.1 Multiplikator Mui

Wie bereits erwähnt, liefert jeder Winkelsensorempfänger Wi ein Ablagesignal ai. Dieses Ablagesignal ai ist ein Vektor mit mindestens 2 skalaren Komponenten (z.B. Seitenwinkel und Höhenwinkel) und stellt eine Messung der Soll-Ist-Differenz für die mindestens 2 durch Sensorsignale gesteuerten, oberen Drehach-

EP 0 276 454 B1

sen des Teilservos Si dar, der die Visierlinie des Winkelsensorempfängers Wi bewegt.

Aber die Zahl solcher Drehachsen des Teilservos Si braucht nicht gleich der Zahl der Komponenten des Ablagevektors ai zu sein. Auch kann die Bewegung einer einzigen Drehachse bei unbewegtem Ziel bewirken, dass sich mehr als eine Komponente des Ablagevektors ai verändert.

Deshalb eignet sich der Ablagevektor ai nicht direkt als Steuervektor mi für den Teilservo Si, welcher Steuervektor mi den Ablagevektor ai auf Null reduzieren soll. Immerhin darf der Steuervektor mi eine lineare Funktion des Ablagevektors ai sein, solange der Ablagevektor ai genügend klein bleibt. Diese lineare Funktion werde durch die (zeitvariable) Matrix Mai dargestellt und durch den (steuerbaren) Multiplikator Mui realisiert. Dieser Multiplikator Mui soll möglichst zeitverzugslos arbeiten, damit die Ablage ai möglichst schnell, sicher und genau abgebaut wird. Deshalb besteht der Multiplikator Mui vorzugsweise aus analoger Hardware (z.B. ein Feld von Motorpotentiometern, je eines pro Element der Matrix Mai) oder aus digitaler Einzweck-Hardware (z.B. ein Feld von Schaltern, falls die Matrixelemente nur eine begrenzte Zahl von diskreten Werten annehmen können wie z.B. bei der robusten Matrix nach Abschnitt 4.2. Solche Schalter können auch blosse Verbindungen oder Unterbrüche sein, falls die entsprechenden Matrixelemente sich nie ändern).

Somit hat der Multiplikator Mui kein Gedächtnis, d.h., sein Ausgangssignal mi hängt (bei vorgegebener Multiplikatormatrix Mai) nur vom gegenwärtigen Eingangssignal ai ab, nicht aber von früheren Werten dieses Eingangssignals.

Hingegen verdichtet der Multiplikator Mui redundante Messungen, falls der Ablagevektor ai mehr als 2 skalare Komponenten aufweist (z.B. weil der Winkelsensorempfänger Wi eine Kombination von mehreren Empfängern mit gemeinsamer Visierlinie ist, also z.B. von Fernsehkameras, FLIR-Kameras, Radars usw., wobei sowohl die Wellenlänge als auch die Messrichtungen (quer zur Visierlinie) dieser Geräte völlig verschieden sein können).

Ausserdem verteilt der Multiplikator Mui die verdichteten Messungen in geeigneter Weise auf die durch Sensorsignale steuerbaren Drehachsen des Teilservos Si, falls deren Zahl grösser als 2 ist.

2.2 Zielestimator Ze

Im Gegensatz zum Multiplikator Mui hat der Zielestimator Ze ein Gedächtnis und benutzt es, um aus den Positionen c aller Visierlinien, allen Messungen ai (i = 1, 2, 3,...) der Ablagen von diesen Visierlinien und allen Distanzmessungen di (i = 1, 2,...) den Bewegungszustand ez des Ziels in allen seinen Zustandsvariablen in einem geeigneten Koordinatensystem zu schätzen. Bei gleichem Koordinatensystem stellt dieser Ist-Bewegungszustand ez des Ziels (zumindest im Winkel) auch den Soll-Bewegungszustand (der Visierlinie) jenes Teilservos Si dar, dessen Zielsensoren Signale mit vernachlässigbar kleiner Laufzeit (senden und) empfangen. Der Soll-Bewegungszustand der übrigen Teilservos Si geht aus ez durch zeitlich positive oder negative Extrapolation hervor. Fortan seien in der Schätzung ez auch diese zeitlichen Extrapolationen enthalten.

Damit die Varianz $\tilde{V}z$ der Schätzfehler $\tilde{e}z$ der Schätzung ez des Zielestimators Ze minimal ist, wird er vorzugsweise als Extended Kalman-Bucy-Filter realisiert. Anwendungen des (Extended) Kalman-Filters finden sich z.B. in der Patentschrift US 4 320 287 sowie auf den Seiten 482 bis 489 der IEEE TRANSACTIONS ON AEROSPACE AND ELECTRONIC SYSTEMS, VOL. AES-17, NO. 4, July 1981. Solch ein Extended Kalman-Filter rechnet ohne weiteres auch Triangulationen mit voneinander weit entfernten Winkelsensoren, welche damit (aktive) Distanzsensoren ergänzen oder ersetzen können.

2.3 Regler R

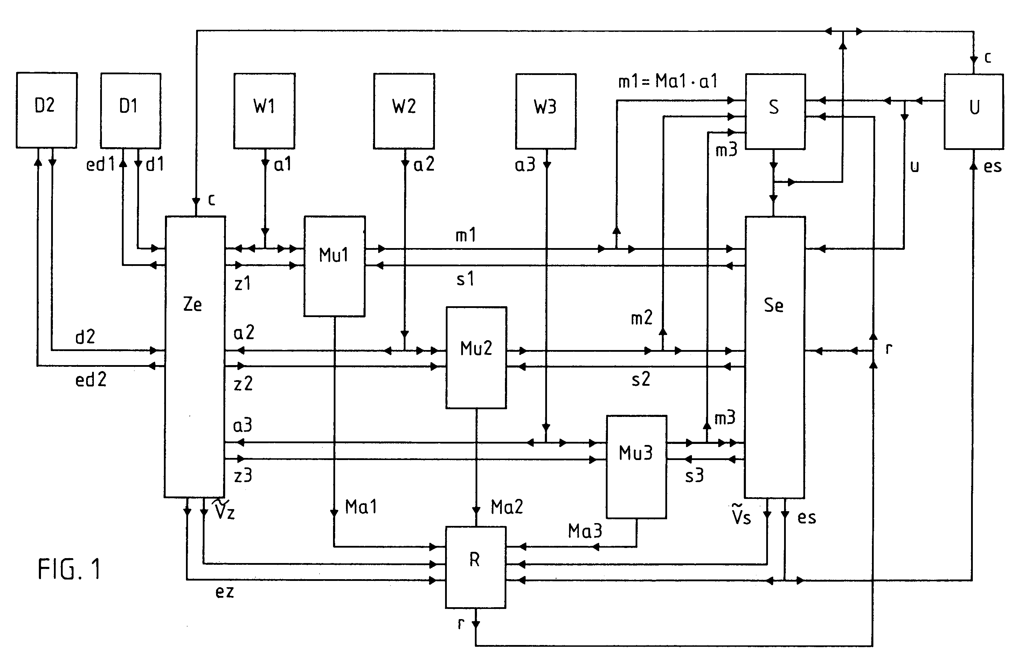

Wäre der Servo S ideal, so wäre sein Ist-Bewegungszustand $\hat{e}s$ zeitverzugslos und genau gleich seinem Soll-Bewegungszustand ez. Zu diesem Zweck müsste der Servo S u.a. unendlich breitbandig sein. In Wirklichkeit schwingt er, falls seine Bandgrenze höher liegt als die Resonanzfrequenzen seiner Struktur. Deshalb liegt seine Bandgrenze tiefer und ist vorzugsweise ungefähr gleich der Bandgrenze seines Nutzsignals ez. Zum Ausgleich wird gemäss Fig. 1 dem Servo S und dem Servoestimator Se der Regler R vorgeschaltet.

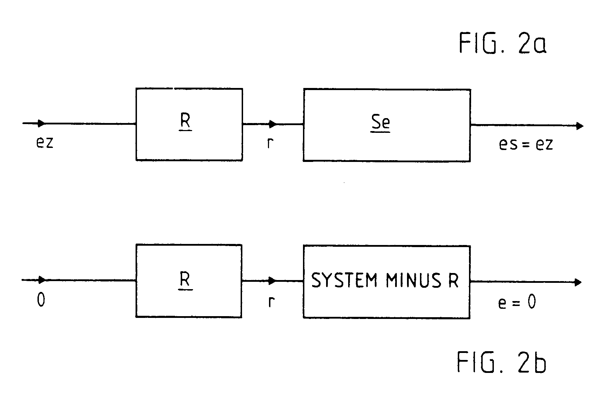

Wären alle Elemente aller Matrizen Mai aller Multiplikatoren Mui gleich Null, so würden der Servo S und der Servoestimator Se von der Zielbewegung nicht direkt über die Soll-Ist-Differenzen mi, sondern nur indirekt über das Regelsignal r beeinflusst. Dann müsste der Regler R gleich dem inversen System zum Servo S sein, damit ihre Serie-Schaltung sich wie ein idealer Servo verhält. Aber der Serso S kann nicht genau invertiert werden, weil sein Verhalten bzw. seine Differentialgleichung nicht genau bekannt ist. Deshalb ist gemäss Fig. 2a der Regler R nicht zum Servo S genau invers, sondern zu jenem Teil des

4

Servoestimators Se, der ein Modell des Servos S darstellt. Dieses Modell modelliert im wesentlichen die Trägheit des Servos S, welche vom Regler R so kompensiert wird, dass der Ausgang es des Servoestimators Se gleich dem Eingang ez des Reglers R ist, wobei der Ausgang r des Reglers R gleich dem Eingang des Servoestimators Se ist, was bedeutet, dass der Regler R invers zum (Modell im) Servoestimator Se ist. Damit ist der Regler R im Rahmen der Genauigkeit des Modells auch invers zum Servo S. Ungenauigkeiten des Modells werden vom Servoestimator Se laufend abgebaut, indem dieser anhand des Lagesensorsignals c dauernd beobachtet, wie sich der Servo S in Wirklichkeit verhält.

In Fig. 2a wird der Ausgang es des Servoestimators Se nicht zum Regler R zurückgeführt. Das ist auch gar nicht nötig, wenn Se durch R genau invertiert wird, und wenn Se stabil ist, was bedeutet, dass die Stossantwort von Se abklingt. Aber für eine genaue Inversion von Se benötigt R das Modell von Se und damit das Modell des Modells von S. Weil es ein Leerlauf wäre, das Modell eines Modells zu betreiben, und damit die Folgen der Ungenauigkeiten dieses Modells von R abgebaut werden können, speist der Servoestimator Se gemäss Fig. 1 seinen vollständigen Bewegungszustand es und damit die vollständige Schätzung des Bewegungszustands ês des Servos S zum Regler R zurück. Damit eröffnet sich eine neue Möglichkeit gemäss Figur 2b der Betrachtung der Funktion des Reglers R. Dieser macht nun nicht mehr die Schätzung es des Servobewegungszustands gleich der Schätzung ez des Zielbewegungszustands (falls beide im gleichen Koordinatensystem geschätzt werden), sondern er macht den scheinbaren Verfolgungsfehler e als Positionsanteil der Soll-Ist-Differenz ez-es gleich Null. So betrachtet ist der Eingang des Reglers R nicht mehr ez, sondern ez-es = 0, und der Regler R ist nicht mehr nur invers zum Servoestimator Se, sondern zum gesamten Rest des Zielverfolgungssystems samt Plattformbewegung und Zielbewegung. Und in diesem neuen und umfassenderen Konzept darf nun auch die Voraussetzung fallen, dass alle Elemente aller Matrizen Mai aller Multiplikatoren Mui gleich Null seien. Vielmehr wird die voraussehbare Zukunft des Bewegungszustands ez des Ziels bzw. des Zielestimators Ze vom Regler R berücksichtigt. Dabei ersparen die Eingänge ez und es des Reglers R ihm eine entsprechende Modellbildung, während er die Matrizen Mai benötigt, um die direkte Ankopplung der steuerbaren Drehachsen des Servos S und des Servoestimators Se an die Zielbewegung richtig zu modellieren. Dabei nimmt der Regler R vorzugsweise an, dass die gegenwärtigen Werte der Matrizen Mai auch für die Zukunft gelten.

Man beachte, dass der Regler R nicht den wirklichen Verfolgungsfehler ê (den niemand kennt) gleich Null macht, sondern nur dessen (fehlerbehaftete) Schätzung e, welche deshalb "scheinbarer Verfolgungsfehler" genannt wird.

## 2.4 Servoestimator Se

Weil der Lagesensorsignalvektor c nur eine unvollständige und fehlerbehaftete Messung des Bewegungszustands ês des Servos S darstellt, muss der Servoestimator Se diesen Bewegungszustand es schätzen aufgrund des Lagesensorsignalvektors c sowie der Steuersignale mi (i = 1, 2, 3,...) und r des Servos S. Auch dieser Servoestimator Se ist vorzugsweise ein (Extended) Kalman-Bucy-Filter, welches im wesentlichen ein Modell des Servos S ist, welches Modell eine Schätzung des Lagesensorsignalvektors c erzeugt und diese Schätzung mit der wirklichen Messung c vergleicht. Eine allfällige Abweichung wird Residuum genannt und dient dazu, den Bewegungszustand es des Modells Se an jenen des Originals S anzupassen. Mit Hilfe von adaptiven Zusätzen zum Kalman-Bucy-Filter kann auch das Modell selber an sein Original S angepasst werden.

## 3. Figurenbeschreibung

Die **Figur 1** ist ein Schaltschema des erfindungsgemässen Zielverfolgungssystems mit (als Beispiel!) 2 Distanzsensor-Visierlinien, vertreten durch die Distanzsensoren D1 und D2, sowie mit (als Beispiel!) 3 Winkelsensor-Viserlinien, vertreten durch die Winkelsensoren W1, W2, und W3. Die Ablagesignale a1, a2 und a3 der Winkelsensoren gehen einerseits direkt in den Zielestimator Ze ein und andererseits indirekt über die Multiplikatoren Mu1, Mu2 und Mu3 gleichermassen in den Servo S und seinen Servoestimator Se. Der Zielestimator Ze verarbeitet die Ablagesignale a1, a2 und a3 zusammen mit dem Lagesensorsignal c aus dem Servo S und den Distanzmessungen d1 und d2 der Distanzsensoren zu einer Schätzung ez des Bewegungszustands des Ziels. Die Projektionen ed1 und ed2 von ez auf die entsprechenden Distanzsensor-Visierlinien helfen den Distanzsensoren D1 und D2 bzw. ihren elektronischen Distanzservos, das Ziel distanzmässig zu verfolgen. Winkelmässig wird das Ziel vom Servo S verfolgt, der alle Zielsensoren D1, D2, W1, W2 und W3 trägt. Er wird vom Ziel zeitverzugsarm, aber ungenau über die Multiplikatoren Mu1, Mu2 und Mu3 sowie zeitverzugsreich, aber genau über den Zielestimator Ze und den Regler R gesteuert. Genau die gleichen Steuersignale m1, m2, m3 und r empfängt auch der Servoestimator Se, der sie zusammen mit dem Lagesensorsignal c zu einer Schätzung es des Bewegungszustandes des Servos verarbeitet. m1, m2 und m3 sind Positionen, während r auch Geschwindigkeiten oder Beschleunigungen usw. darstellen kann. Die Schätzungen ez und es samt ihren Schätzfehlervarianzen $\tilde{V}z$ und $\tilde{V}s$ werden zusammen mit den Matrizen Ma1, Ma2 und Ma3 der Multiplikatoren Mu1, Mu2 und Mu3 vom Regler R zum Stellsignal r verarbeitet. Die Matrizen Ma1, Ma2 und Ma3 können vom Zielestimator Ze her über die Signale z1, z2 und z3 sowie vom Servoestimator Se her über die Signale s1, s2 und s3 eingestellt werden. Das Ueberwachungsgerät U weist den Servo S und den Servoestimator Se gleichartig über sein Einweisungssignal u auf ein neues Ziel ein und empfängt vom Servo S dessen Lagesensorsignal c und vom Servoestimator Se dessen Schätzung es. Nicht dargestellt ist der Varianzestimator Ve als Teil des Zielestimators Ze sowie weitere Details.

Die **Figuren 2a und 2b** veranschaulichen die Systeminversion als Aufgabe des Reglers R. In der einfachen Betrachtung von Figur 2a ist der Regler R invers zum Servo S bzw. zum Servoestimator Se. In der genaueren Betrachtung von Figur 2b ist der Regler R invers zum ganzen Rest des Zielverfolgungssystems.

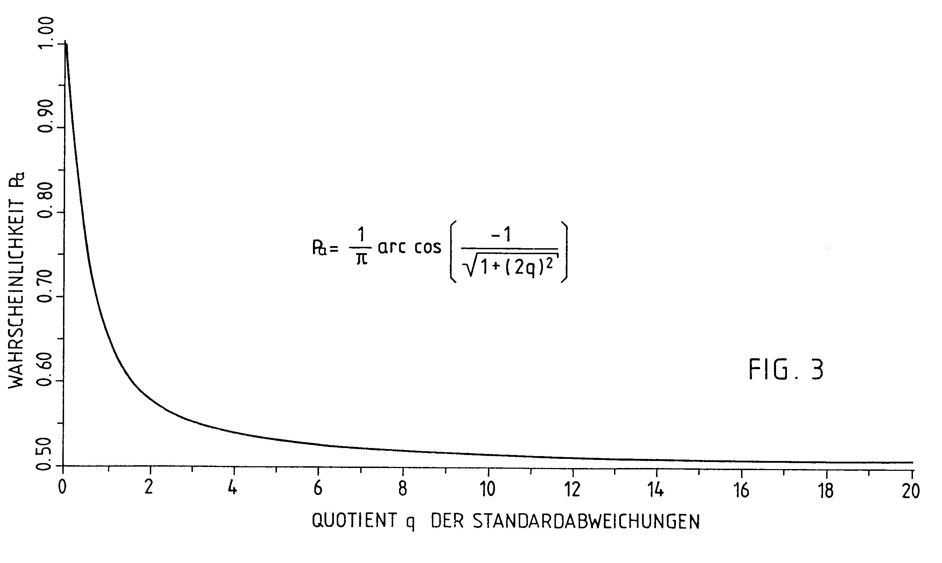

Die **Figur 3** stellt die Wahrscheinlichkeit Pa dar, dass von zwei skalaren und redundanten Sensorsignalen das absolut kleinere auch das genauere ist, dies in Funktion der Güte q der Sensoren.

4. Multiplikatormatrizen

In diesem Abschnitt wird nur die i-te Visierlinie betrachtet.

4.1 Varianzoptimale Matrix

Der Vektor âi sei die Ablage des Ziels von der Visierlinie, wie sie vom Winkelsensorempfänger Wi dann gemessen würde, wenn dieser keine Messfehler

$$\tilde{a}i = ai - \hat{a}i \qquad (1)$$

machen würde. Der 2-Vektor $\hat{a} = \hat{e}$ sei die wahre Ablage des Ziels von der Visierlinie, wie sie von einem fehlerfreien Winkelsensorempfänger W geliefert würde, der in genau 2 verschiedenen Richtungen quer zur Visierlinie (z.B. Seitenwinkel und Höhenwinkel) misst und somit keine redundanten Messungen liefert. Falls die Vektoren âi und â genügend klein sind, ist ihre Abhängigkeit genügend linear und kann durch die rechteckige und vollrangige Mess-Matrix H in Gleichung (2) dargestellt werden:

$$\hat{a}i = H \cdot \hat{a} \qquad (2)$$

Umgekehrt gilt:

$$\hat{a} = H^\$ \cdot \hat{a}i = (H' \cdot H)^{-1} \cdot H' \cdot \hat{a}i \qquad (3)$$

Die Moore-Penrose-Pseudoinverse

$$H^\$ = (H' \cdot H)^{-1} \cdot H' \qquad (4)$$

garantiert, dass das Quadrat $(\bar{a}-H^\$ \cdot \bar{a}i)' \cdot (\bar{a}-H^\$ \cdot \bar{a}i)$ des Betrags $|\bar{a}-H^\$ \cdot \bar{a}i|$ des Vektors $\bar{a}-H^\$ \cdot \bar{a}i$ zwar nicht unbedingt Null wird wie beim Vektor $\hat{a}-H^\$ \cdot \hat{a}i$, aber doch wenigstens minimal. Dabei sei

$$\bar{a}i = J \cdot ai \qquad (5)$$

jene Schätzung für âi, bei welcher der Schätzfehler

$$\mathring{a}i = \bar{a}i - \hat{a}i = J \cdot ai - \hat{a}i \qquad (6)$$

nicht korreliert mit $\bar{a}i$ und deshalb varianzminimal ist. (Wäre $\mathring{a}i$ korreliert mit $\bar{a}i$, so könnte diese Korrelation benutzt werden, um die Varianz von $\mathring{a}i$ zu verkleinern). Nachmultiplizieren der beiden Seiten von Gleichung (6) mit $ai'$ und Erwartungswertbildung ergibt nach Gleichung (1)

$$E[\overset{\circ}{a}i \cdot ai'] = E[J \cdot ai \cdot ai' - \hat{a}i \cdot ai']$$

$$= E[J \cdot ai \cdot ai' - \hat{a}i \cdot \hat{a}i' - \hat{a}i \cdot \tilde{a}i'] \qquad (7)$$

Somit gilt: Ist der Messfehler $\tilde{a}i$ nicht korreliert mit dem fehlerfreien Wert $\hat{a}i$ und deshalb varianzminimal, so ist der Schätzfehler $\overset{\circ}{a}i$ nicht korreliert mit dem Messwert $ai$ und somit auch dem Schätzwert $\bar{a}i$ und deshalb auch varianzminimal, falls der Schätzwert $\bar{a}i$ gemäss

$$\bar{a}i = J \cdot ai = \hat{V}ai \cdot Vai^{-1} \cdot ai = (Vai - \tilde{V}ai) \cdot Vai^{-1} \cdot ai \qquad (8)$$

berechnet wird. Die Bestimmung der Varianzen $Vai$, $\hat{V}ai$ und $\tilde{V}ai$ des Ablagevektors $ai$, seines wahren Wertes $\hat{a}i$ so wie seines Fehlers $\tilde{a}i$ mit Hilfe der Redundanz der Sensorsignale a, d und c wird in Abschnitt 5 beschrieben. Die Schätzmatrix J verschwindet, falls $\tilde{V}ai = Vai$ wird, weil das Ablagesignal $ai$ nur aus Rauschen $\tilde{a}i$ besteht. Umgekehrt wird J zur Einheitsmatrix, wenn das Rauschen $\tilde{a}i$ verschwindet.

Damit lassen sich die redundanten Messungen $ai$ verdichten zum varianzminimalen Schätzwert

$$\bar{a} = H^{\$} \cdot \bar{a}i = H^{\$} \cdot J \cdot ai = (H' \cdot H)^{-1} \cdot H' \cdot (Vai - \tilde{V}ai) \cdot Vai^{-1} \cdot ai$$

$$(9)$$

der wahren und redundanzfreien Ablage $\hat{a}$, welcher nun noch auf die steuerbaren Drehachsen des Teilservos $Si$ verteilt werden soll:

Es gelte:

$$\hat{a} = L \cdot \hat{e}i = \hat{e} \qquad (10)$$

Der wahre Verfolgungsfehlervektor $\hat{e}i$ habe soviele Komponenten wie der Teilservo $Si$ steuerbare Drehachsen hat und stelle eine mögliche Kombination von wahren Positionsfehlern dieser Drehachsen dar, welche die wahre Ablage $\hat{a}$ bewirken würde, wobei diese Positionsfehler $\hat{e}i$ genügend klein seien. Mit

$$\hat{e}i = L^{\$} \cdot \hat{a} = L' \cdot (L \cdot L')^{-1} \cdot \hat{a} \qquad (11)$$

wählt man vorzugsweise jene Kombination von Positionsfehlern, für welche das Quadrat $\hat{e}i' \cdot \hat{e}i$ des Betrags $|\hat{e}i|$ des Vektors $\hat{e}i$ minimal wird, alls an die Positionen der Drehachsen keine andere Forderung gestellt wird. Andernfalls ersetzt man die Moore-Penrose-Pseudoinverse

$$L^{\$} = L' \cdot (L \cdot L')^{-1} \qquad (12)$$

der vollrangigen Matrix L durch eine andere Pseudoinverse, welche die Bedingung

$$L \cdot L^{\$} \cdot L = L \qquad (13)$$

ebenfalls erfüllt, also z.B. durch

$$L^{\$} = L' \cdot (L \cdot L')^{-1} + L' \cdot (L \cdot L')^{-1} \cdot L \cdot Y - Y \qquad (14)$$

wobei die sonst beliebige Matrix Y die erwähnten Forderungen erfüllt, welche z.B. enstehen können, wenn zur Vermeidung des Spiegeleffekts die Drehlage einer Radarantenne relativ zur Spiegelebene vorgeschrieben ist, oder wenn es gilt, Singularitäten oder Anschläge der steuerbaren Drehachsen des Teilservos $Si$ zu vermeiden. Ist dieser positionsgesteuert, so genügt es, ihm als Steuersignal mi die Positionsfehlerschätzung

$$mi = \overline{ei} = L^\$ \cdot \overline{a} = L^\$ \cdot H^\$ \cdot J \cdot \overline{ai} \qquad (15)$$

einzugeben, damit er die Ablage ai abbaut. Damit lässt sich die Matrix Mai des Multiplikators Mui für Y = 0 varianzoptimal berechnen als

$$Mai = L^\$ \cdot H^\$ \cdot J \qquad (16)$$
$$= L' \cdot (H' \cdot H \cdot L \cdot L')^{-1} \cdot H' \cdot (Vai - \tilde{V}ai) \cdot Vai^{-1}$$

Dabei entsprechen die Spezialfälle $\tilde{V}ai$ = Vai bzw. $\tilde{V}ai$ = 0 mit einer einzigen Visierlinie den Figuren 1 bzw. 2 der EP-A 0207521.

4.2 Robuste Matrix

Die Schätzung der Varianzen Vai und $\tilde{V}ai$ des Ablagevektors ai und seines Fehlers $\tilde{a}i$ gemäss Abschnitt 5 erfordert eine gewisse Beobachtungsdauer. Unerwartete Aenderungen von Vai und $\tilde{V}ai$ während der Beobachtungsdauer verfälschen die Schätzung und machen die Matrix Mai aus Gleichung (16) suboptimal, insbesondere bei plötzlichen Sensorstörungen, z.B. durch Spiegeleffekt. Die robuste Multiplikatormatrix soll den schädlichen Einfluss solcher Sensorstörungen auf die Verfolgungsqualität gering halten.
Dabei sei vorausgesetzt, dass die Elemente der varianzoptimalen Matrix Mai gemäss Gleichung (16) für $\tilde{V}ai$ = 0 nur zwei verschiedene Werte annehmen können, wobei einer dieser Werte Null ist, was bedeutet, dass das entsprechende Element keine Kopplung zwischen der entsprechenden Drehachse und der entsprechenden Komponente des Ablagevektors ai vermittelt. Der Wert jener Elemente, die eine solche Kopplung vermitteln, ist reziprok zur Zahl der Komponenten des Ablagevektors ai pro Zeile von Mai bzw. Drehachse von Si.
Die Grundidee der robusten Matrix geht aus von der CH-PS 415 135. Diese beschreibt ein Zielverfolgungssystem mit einer Visierlinie (i = 1), einem 2-achsigen Teilservo Si = S1 und einem Winkelsensorempfänger Wi = W1, welcher aus 2 Radarempfängern besteht, welche verschiedene Wellenlängen empfangen und je im Seitenwinkel und Höhenwinkel die Zielablage messen. Somit hat der Ablagevektor ai = a1 4 Komponenten, die wie folgt definiert seien:

a11 = 1. Komponente von a1 → Seitenwinkel des 1. Radarempfängers
a12 = 2. Komponente von a1 → Höhenwinkel des 1. Radarempfängers
a13 = 3. Komponente von a1 → Seitenwinkel des 2. Radarempfängers
a14 = 4. Komponente von a1 → Höhenwinkel des 2. Radarempfängers.

Die 2 Komponenten des Ablagevektors â und des Verfolgungsfehlervektors ê = êi = ê1 seien wie folgt definiert:
1. Komponente → Seitenwinkel
2. Komponente → Höhenwinkel
Damit werden

$$L = I = \begin{bmatrix} 1 & 0 \\ 0 & 1 \end{bmatrix} \quad und \quad H = \begin{bmatrix} I \\ I \end{bmatrix} \rightarrow \qquad (21)$$

$$H' \cdot H = 2 \cdot I \quad und \quad (H' \cdot H \cdot L \cdot L')^{-1} = \tfrac{1}{2} \cdot I \rightarrow \qquad (22)$$

$$L' \cdot (H' \cdot H \cdot L \cdot L')^{-1} \cdot H' = \tfrac{1}{2} \cdot [I, I] \qquad (23)$$

Wären die beiden Radarempfänger fehlerfrei, so würde die Fehlervarianz $\tilde{V}ai$ = $\tilde{V}a1$ verschwinden und die Multiplikatormatrix Mai = Ma1 würde nach Gleichung (16)

$$
\mathbf{Ma1} = \begin{bmatrix} \tfrac{1}{2} & 0 & \tfrac{1}{2} & 0 \\[1em] 0 & \tfrac{1}{2} & 0 & \tfrac{1}{2} \end{bmatrix} \begin{matrix} \text{Seitenwinkel} \\[1em] \text{Höhenwinkel} \end{matrix} \qquad (24)
$$

$$\text{1.Radar} \qquad \text{2.Radar}$$

Nach CH-PS 415 135 hingegen sind alle Elemente von Ma1 gleich Null ($=0$) mit Ausnahme von je einem Element pro Zeile, welches gleich Eins ($=1$) ist und jenem Empfänger entspricht, dessen Ablagesignalkomponente für die betreffende Zeile bzw. Drehachse die absolut kleinste ist.

Das geht gut, solange alle Empfänger das Ziel sehen. Wenn jedoch einer davon kein genügend starkes Echo vom Ziel empfängt und deshalb ein verschwindendes Ablagesignal abgibt, wie das üblich ist, so wird ausgerechnet dieses Nullsignal zum Steuersignal für den Servo, wodurch dieser das Ziel verliert.

Solch ein Verfolgungsabbruch lässt sich aber vermeiden, weil ein blinder Empfänger in allen seinen Ablagesignalkomponenten gleichzeitig Nullsignale ausgibt, was ein sehender Empfänger höchstens bei guter Verfolgung und auch dann nur mit geringer Wahrscheinlichkeit tut. Deshalb kommen erfindungsgemäss bei der Suche nach dem absolut kleinsten Signal nur jene Empfänger in Frage, die nicht ausschliesslich Nullsignale abgeben. Wird dadurch ausnahmsweise ein sehender Empfänger ausgeschlossen, so kann dieses seltene Missgeschick höchstens so lange andauern, bis die Verfolgung schlechter wird, denn dann gibt kein sehender Empfänger mehr Nullsignale ab. Sind alle Empfänger blind oder irrtümlich ausgeschlossen, so wird das Ziel im Memobetrieb gemäss Abschnitt 8 verfolgt.

Dabei gilt ein Signal dann als Nullsignal, wenn es absolut wesentlich kleiner ist als das Rest-Rauschen auf der Leitung, und zwei Empfänger gelten dann als verschieden, wenn sie Ziel-Echos mit verschiedener Wellenlänge empfangen.

Eine solche robuste Matrix schützt zeitverzugslos die Verfolgungsqualität vor starken Zielsensorstörungen, weil diese mit grosser Wahrscheinlichkeit nicht absolut kleine, sondern absolut grosse Ablagesignale erzeugen. Zur Illustration stellt Fig. 3 die Wahrscheinlichkeit

$$Pa = \text{arc cos} \left[ -(1 + 4 \cdot q^2)^{-\frac{1}{2}} \right] / \pi \qquad (25)$$

dar, dass beispielsweise die absolut kleinere der beiden Ablagesignalkomponenten $a12$ und $a14$ im Höhenwinkel gemäss CH-PS 415 135 auch die (absolut) genauere Komponente ist, was bedeutet, dass der entsprechende Fehler $\tilde{a}12$ bzw. $\tilde{a}14$ absolut kleiner ist. Dabei ist vorausgesetzt, dass $\hat{a}12 = \hat{a}14$ gleich der wahren Ablage des Ziels von der Visierlinie im Höhenwinkel sei, dass alle erwähnten Signale mittelwertfrei und gaussverteilt seien und dass

$$q^2 = \frac{E[\hat{a}12^2]}{E[\tilde{a}12^2 + \tilde{a}14^2]} = \frac{E[\hat{a}14^2]}{E[\tilde{a}12^2 + \tilde{a}14^2]} \qquad (26)$$

sowie

$$E[\tilde{a}12 \cdot \tilde{a}14] = 0 \qquad (27)$$

sei. Somit ist $q$ ein Mass für die Güte der Zielsensoren; und die robuste Matrix empfiehlt sich dann, wenn ein Teil der Zielsensoren sehr schnell sehr schlecht werden kann, z.B. durch Spiegeleffekt.

9

5. Sensordatenkorrelation

In Abschnitt 4 wurden die Varianzen Vai und $\tilde{V}ai$ des Ablagevektors ai und seines Fehlers ãi benutzt. Hier sollen sie nun bestimmt werden.

5.1 Ablagefehlervarianz $\tilde{V}ai$

Wenn in Gleichung (2) die Messmatrix H rechteckig ist, weil der redundante Vektor âi mehr Komponenten hat als der nichtredundante Vektor â, so besteht zwischen den Komponenten des fehlerfreien Ablagevektors âi eine lineare Abhängigkeit. Diese sei durch die rechteckige und vollrangige Matrix G in Gleichung (31) dargestellt.

G•âi = 0    (31)

Vormultiplizieren von Gleichung (2) mit G liefert:

G•âi = G•H•â = 0    (32)

Weil die Gleichungen (31) und (32) für beliebige Vektoren âi bzw. â gelten müssen, folgt daraus

G•H = 0    (33)

Nachfolgend wird vorausgesetzt, dass die Matrix G vollen Rang hat und die Gleichung (33) erfüllt, sonst aber beliebig ist. Für das Zielverfolgungssystem gemäss CH-PS 415 135 in Abschnitt 4.2 wäre z.B.

$$G = \begin{bmatrix} 1 & 0 & -1 & 0 \\ 0 & 1 & 0 & -1 \end{bmatrix} \qquad (34)$$

geeignet.

Hat der Ablagevektor ai ni Komponenten, so hat die Matrix G ni Kolonnen und ni-2 Zeilen, falls die Mess-Matrix H zwei Kolonnen hat, weil der Vektor â zwei Elemente hat. Wenn man beide Seiten von Gleichung (31) mit âi' nachmultipliziert und den Erwartungswert bildet, erhält man

E[G•âi•âi'] = G•E[âi•âi'] = G•$\hat{V}$ai = 0    (35)

Ist der Fehler ãi varianzminimal, d.h. nicht mit dem fehlerfreien Wert âi korreliert (und sind ai, âi & ãi mittelwertfrei), so gilt zwischen ihren Varianzen Vai, $\hat{V}$ai und $\tilde{V}$ai folgende Beziehung:

$$\begin{aligned} Vai &= E[ai \cdot ai'] = E[(âi + ãi) \cdot (âi + ãi)'] \\ &= E[âi \cdot âi' + ãi \cdot ãi' + âi \cdot ãi' + ãi \cdot âi'] \\ &= E[âi \cdot âi'] + E[ãi \cdot ãi'] = \hat{V}ai + \tilde{V}ai \qquad (36) \end{aligned}$$

Damit wird die Gleichung (35) zu

$$G \cdot (Vai - \tilde{V}ai) = 0 \qquad (37)$$

10

Daraus folgt gemäss Gleichung (8), dass der Schätzwert $\bar{a}i$ ebenso wie der fehlerfreie Wert $\hat{a}i$ der Gleichung (31) gehorcht, weshalb theoretisch als $H^\$$ in Gleichung (9) bzw. (16) irgendeine Pseudoinverse von H verwendet werden kann. Immerhin behält die Moore-Penrose-Pseudoinverse $(H' \cdot H)^{-1} \cdot H'$ von H den Vorteil, dass sie die Fehlerquadratsumme von allfälligen numerischen Ungenauigkeiten minimiert.

Die Ablagevarianz Vai wird gemäss Abschnitt 5.2 aus dem Ablagevektor ai berechnet. Von der Ablagefehlervarianz $\tilde{V}$ai wissen wir zunächst, dass sie symmetrisch ist. Somit sind von ihren $ni^2$ Elementen deren $ni \cdot (ni + 1)/2$ zunächst unbekannt. Davon werden jedoch alle bis auf $3 \cdot ni/2$ Elemente gleich Null, wenn wir annehmen dürfen, dass nur je 2 Komponenten von ai mit der gleichen Zielechowellenlänge gemessen wurden und dass nur solche Komponentenpaare korrelierte Fehler aufweisen. Fallen auch diese Korrelationen (z.B. dank kugelsymmetrischem Ziel) weg, so bleiben als Unbekannte nur noch die ni Diagonalelemente von $\tilde{V}$ai zurück.

Andererseits enthält die Matrix-Gleichung (37) $(ni-2) \cdot ni$ skalare Gleichungen für die erwähnten Unbekannten. Dabei ist aber mindestens eine dieser skalaren Gleichungen linear abhängig von den andern, weil die Matrix

$$\hat{V}ai = Vai - \tilde{V}ai$$

durch die Gleichung (35) bzw. (37) nur bis auf einen mindestens skalaren Faktor bestimmt wird. Trotzdem darf man als Faustregel annehmen, dass die Zahl der Unbekannten linear mit ni wächst, die Zahl der Gleichungen dafür hingegen quadratisch mit ni Deshalb kann man für $ni \geq 4$ zusätzlich zu den unbekannten Elementen der Ablagefehlervarianz $\tilde{V}$ai zumeist auch noch geeignete Elemente von geeigneten Matrizen G (und zwar vorzugsweise relative Kennliniensteilheiten von Zielsensoren) als Unbekannte wählen und durch Sensordatenkorrelation bestimmen.

Beispielsweise kann man für das Element G22 der Matrix G in Gleichung (34) für CH-PS 415 135 statt 1 die relative Kennliniensteilheit $k\lambda$ im Höhenwinkel (welche besonders stark durch Spiegeleffekte verzerrt wird) wählen. Im Rechenschema auf der folgenden Seite steht links unten eine solche Matrix G und rechts unten eine Null - Matrix N. Rechts oben steht die Matrix

$$\hat{V}ai = Vai - \tilde{V}ai,$$

wobei angenommen ist, dass nur solche Komponentenpaare des Ablagevektors ai korrelierte Fehler $\tilde{a}i$ haben, welche zum selben Radarempfänger bzw. zur selben Zielechowellenlänge gehören.

$$
\begin{pmatrix}
\nabla a_{i11}-\nabla a_{i11} & \nabla a_{i12}-\nabla a_{i12} & \nabla a_{i13} & \nabla a_{i14} \\
\nabla a_{i12}-\nabla a_{i12} & \nabla a_{i22}-\nabla a_{i22} & \nabla a_{i23} & \nabla a_{i24} \\
\nabla a_{i13} & \nabla a_{i23} & \nabla a_{i33}-\nabla a_{i33} & \nabla a_{i34}-\nabla a_{i34} \\
\nabla a_{i14} & \nabla a_{i24} & \nabla a_{i34}-\nabla a_{i34} & \nabla a_{i44}-\nabla a_{i44}
\end{pmatrix}
\begin{pmatrix} 0 & -1 \\ -1 & 0 \\ 0 & k\lambda \\ 1 & 0 \end{pmatrix}
=
\begin{pmatrix} N11 & N21 \\ N12 & N22 \\ N13 & N23 \\ N14 & N24 \end{pmatrix}
$$

Jedem der 8 Elemente der Nullmatrix N entspricht eine skalare Gleichung. Damit können aber nur 7 skalare Unbekannte berechnet werden, weil die Gleichungen N12, N21, N14 und N23 voneinander abhängig sind:

$$N11=0= \quad Vai11-\tilde{V}ai11 \ -Vai13 \ \rightarrow \ \tilde{V}ai11=Vai11-Vai13 \qquad (38)$$

$$N12=0= \quad Vai12-\tilde{V}ai12 \ -Vai23 \ \rightarrow \ \tilde{V}ai12=Vai12-Vai23$$

$$N13=0= \quad Vai13-Vai33 \ +\tilde{V}ai33 \ \rightarrow \ \tilde{V}ai33=Vai33-Vai13$$

$$N14=0= \quad Vai14-Vai34 \ +\tilde{V}ai34 \ \rightarrow \ \tilde{V}ai34=Vai34-Vai14$$

$$N21=0=k\lambda \cdot (Vai12-\tilde{V}ai12)-Vai14 \ \rightarrow \ \tilde{V}ai12=Vai12-Vai14/k\lambda$$

$$N22=0=k\lambda \cdot (Vai22-\tilde{V}ai22)-Vai24 \ \rightarrow \ \tilde{V}ai22=Vai22-Vai24 \cdot Vai23/Vai14$$

$$N23=0=k\lambda \cdot \ Vai23-Vai34 \ +\tilde{V}ai34 \ \rightarrow \ \tilde{V}ai34=Vai34-Vai23 \cdot k\lambda$$

$$N24=0=k\lambda \cdot \ Vai24-Vai44 \ +\tilde{V}ai44 \ \rightarrow \ \tilde{V}ai44=Vai44-Vai24 \cdot Vai14/Vai23$$

Die relative Kennliniensteilheit $k\lambda$ folgt aus den Resultaten $\tilde{V}ai12$ und $\tilde{V}ai34$ der Gleichungen N12 mit N21 und N14 mit N23 übereinstimmend als

$$k\lambda \ = \ Vai14/Vai23 \qquad (39)$$

Damit konnte das an sich quadratische Gleichungssystem (38) problemlos gelöst werden.

Im folgenden Rechenschema sind 3 statt wie bisher 2 Wellenlängen bzw. Empfänger vorausgesetzt:

$$
\begin{array}{cccccc}
11-\tilde{11} & 12-\tilde{12} & 13 & 14 & 15 & 16 \\[2ex]
12-\tilde{12} & 22-\tilde{22} & 23 & 24 & 25 & 26 \\[2ex]
13 & 23 & 33-\tilde{33} & 34-\tilde{34} & 35 & 36 \\[2ex]
14 & 24 & 34-\tilde{34} & 44-\tilde{44} & 45 & 46 \\[2ex]
15 & 25 & 35 & 45 & 55-\tilde{55} & 56-\tilde{56} \\[2ex]
16 & 26 & 36 & 46 & 56-\tilde{56} & 66-\tilde{66} \\
\end{array}
$$

$$
\begin{array}{cccccc|cccccc}
k\alpha & 0 & -1 & 0 & 0 & 0 & N11 & N12 & N13 & N14 & N15 & N16 \\
0 & k\lambda & 0 & -1 & 0 & 0 & N21 & N22 & N23 & N24 & N25 & N26 \\
0 & 0 & 1\alpha & 0 & -1 & 0 & N31 & N32 & N33 & N34 & N35 & N36 \\
0 & 0 & 0 & 1\lambda & 0 & -1 & N41 & N42 & N43 & N44 & N45 & N46 \\
\end{array}
$$

Dabei sind die Elemente der Matrix Vai-$\tilde{V}ai$ aus Platzgründen nur noch durch ihre Indizes bezeichnet. Der 1. Wellenlänge entsprechen die Indizes 1 und 2, der 2. Wellenlänge die Indizes 3 und 4 und der 3. Wellenlänge die Indizes 5 und 6, je für Seitenwinkel $\alpha$ und Lagewinkel $\lambda$. Die Matrix G enthält als 4 Unbekannte die relativen Kennliniensteilheiten k zwischen Empfänger 1 und 2 sowie 1 zwischen Empfänger 2 und 3. Damit ergeben sich die folgenden 24 Gleichungen für 13 Unbekannte:

$$N11=0=k_\alpha \cdot (Vai11-\tilde{V}ai11)-Vai13 \rightarrow \tilde{V}ai11=Vai11-Vai13/k_\alpha$$
$$N12=0=k_\alpha \cdot (Vai12-\tilde{V}ai12)-Vai23 \rightarrow \tilde{V}ai12=Vai12-Vai23/k_\alpha$$
$$N13=0=k_\alpha \cdot Vai13 -Vai33 +\tilde{V}ai33 \rightarrow \tilde{V}ai33=Vai33-Vai13 \cdot k_\alpha$$
$$N14=0=k_\alpha \cdot Vai14 -Vai34 +\tilde{V}ai34 \rightarrow \tilde{V}ai34=Vai34-Vai14 \cdot k_\alpha$$
$$N15=0=k_\alpha \cdot Vai15 -Vai35 \qquad \rightarrow k_\alpha \quad =Vai35/Vai15$$
$$N16=0=k_\alpha \cdot Vai16 -Vai36 \qquad \rightarrow k_\alpha \quad =Vai36/Vai16$$

$$N21=0=k_\lambda \cdot (Vai12-\tilde{V}ai12)-Vai14 \rightarrow \tilde{V}ai12=Vai12-Vai14/k_\lambda$$
$$N22=0=k_\lambda \cdot (Vai22-\tilde{V}ai22)-Vai24 \rightarrow \tilde{V}ai22=Vai22-Vai24/k_\lambda$$
$$N23=0=k_\lambda \cdot Vai23 -Vai34 +\tilde{V}ai34 \rightarrow \tilde{V}ai34=Vai34-Vai23 \cdot k_\lambda$$
$$N24=0=k_\lambda \cdot Vai24 -Vai44 +\tilde{V}ai44 \rightarrow \tilde{V}ai44=Vai44-Vai24 \cdot k_\lambda$$
$$N25=0=k_\lambda \cdot Vai25 -Vai45 \qquad \rightarrow k_\lambda \quad =Vai45/Vai25$$
$$N26=0=k_\lambda \cdot Vai26 -Vai46 \qquad \rightarrow k_\lambda \quad =Vai46/Vai26$$

$$N31=0=l_\alpha \cdot Vai13 -Vai15 \qquad \rightarrow l_\alpha \quad =Vai15/Vai13$$
$$N32=0=l_\alpha \cdot Vai23 -Vai25 \qquad \rightarrow l_\alpha \quad =Vai25/Vai23$$
$$N33=0=l_\alpha \cdot (Vai33-\tilde{V}ai33)-Vai35 \rightarrow \tilde{V}ai33=Vai33-Vai35/l_\alpha$$
$$N34=0=l_\alpha \cdot (Vai34-\tilde{V}ai34)-Vai45 \rightarrow \tilde{V}ai34=Vai34-Vai45/l_\alpha$$
$$N35=0=l_\alpha \cdot Vai35 -Vai55 +\tilde{V}ai55 \rightarrow \tilde{V}ai55=Vai55-Vai35 \cdot l_\alpha$$
$$N36=0=l_\alpha \cdot Vai36 -Vai56 +\tilde{V}ai56 \rightarrow \tilde{V}ai56=Vai56-Vai36 \cdot l_\alpha$$

$$N41=0=l_\lambda \cdot Vai14 -Vai16 \qquad \rightarrow l_\lambda \quad =Vai16/Vai14$$
$$N42=0=l_\lambda \cdot Vai24 -Vai26 \qquad \rightarrow l_\lambda \quad =Vai26/Vai24$$
$$N43=0=l_\lambda \cdot (Vai34-\tilde{V}ai34)-Vai36 \rightarrow \tilde{V}ai34=Vai34-Vai36/l_\lambda$$
$$N44=0=l_\lambda \cdot (Vai44-\tilde{V}ai44)-Vai46 \rightarrow \tilde{V}ai44=Vai44-Vai46/l_\lambda$$
$$N45=0=l_\lambda \cdot Vai45 -Vai56 +\tilde{V}ai56 \rightarrow \tilde{V}ai56=Vai56-Vai45 \cdot l_\lambda$$
$$N46=0=l_\lambda \cdot Vai46 -Vai66 +\tilde{V}ai66 \rightarrow \tilde{V}ai66=Vai66-Vai46 \cdot l_\lambda$$

Hier übersteigt nun die Zahl der unabhängigen Gleichungen jene der Unbekannten massiv, so dass sie vorzugsweise nach bekannten Methoden ausgeglichen werden, z.B. durch Regression nach Gauss oder durch die Methode der "Total Least Squares" nach Pearson, welche hier noch besser geeignet, aber in der Literatur weniger bekannt ist. Stattdessen kann man auch stichprobenweise kontrollieren, wie gut Ablagefehler aus verschiedenen Zielechowellenlängen wirklich unkorreliert sind, indem man einige der entsprechenden Elemente der Ablagefehlervarianz $\tilde{V}ai$ nicht gleich Null setzt, sondern berechnet. Das empfiehlt sich besonders, wenn die Ablagefehler $\tilde{a}i$ zeitlich korreliert sind.

Bisher wurden nur die redundanten Winkelablagesignale $ai$ bezüglich der i-ten Visierlinie in die Sensordatenkorrelation einbezogen. Aber nicht nur diese hängen voneinander ab, sondern alle Signale aller Zielsensoren und Lagesensoren aller Visierlinien, weil alle Zielsensoren das gleiche Ziel verfolgen. Allerdings ist diese Abhängigkeit komplizierter und zum Teil nichtlinear. Sie kann aber leicht linearisiert werden, sei es lokal durch Differentiation, sei es global durch räumliche Transformation. Bei unterschiedlichen Laufzeiten der Zielsensorsignale wird auch noch eine zeitliche Transformation notwendig. Wer den Rechenaufwand nicht scheut, kann alle Sensorsignale durch Sensordatenkorrelation miteinander vergleichen und damit deren Aussagekraft potenzieren. Das ist dann besonders empfehlenswert, wenn die Winkelablagesignale ai an sich nicht redundant sind und/oder wenn die Zieldistanz (aus Tarnungsgründen ausschliesslich) durch Triangulation statt (auch) durch aktive Distanzsensoren bestimmt werden soll. Man kann sogar Pseudosensorsignale in die Sensordatenkorrelation einführen wie z.B. den scheinbaren Verfolgungsfehler e gemäss Abschnitt 7. So kann man eine unsichere Kennliniensteilheit von Zielsensoren mit einer sicheren Kennliniensteilheit von Lagesensoren vergleichen und damit eichen, wenn man (beispielsweise über das Steuersignal r) künstlich kleine Verfolgungsfehler erzeugt, welche so hochfrequent sind, dass der Zielestimator Ze ihre Auswirkung bei falscher Zielsensorkennliniensteilheit von einer echten Zielbewegung zu unterscheiden vermag. Eine solche Eichung ist besonders wertvoll, wenn man den Spiegeleffekt mit Hilfe von "off-boresight-tracking" bekämpft, was allerdings bewirkt, dass die Ablagesignale ai nicht mehr mittelwertfrei sind.

Alle Berechnungen zur Sensordatenkorrelation werden vorzugsweise vom Zielestimator Ze ausgeführt und ihre Resultate für seine eigene Optimalität sowie zur Steuerung der Multiplikatoren Mui über die Multiplikatorsteuersignale zi benutzt.

## 5.2 Ablagesignalvarianz Vai

Bisher war vorausgesetzt, dass der Operator E eine Mittelung über das Ensemble aller Musterfunktionen darstellt. In Wirklichkeit kennen wir nur eine Musterfunktion, von der wir annehmen müssen, dass sie ergodisch sei, sodass wir über die Zeit statt über das Ensemble mitteln dürfen. Damit die Ablagesignalvarianz Vai möglichst aktuelle Werte hat, wird nachfolgend ein Varianzestimator Ve als weiterer Teil des Zielestimators Ze beschrieben, mit dem Vai in möglichst kurzer Beobachtungszeit möglichst genau geschätzt werden kann.

Dieser Varianzestimator Ve ist vorzugsweise ein Kalman-Bucy-Filter, dessen Zustandsvariablen die Elemente Vaikl von Vai sind. Das zeitliche Verhalten dieser Elemente wird beschrieben durch die Matrix-Riccati-Differentialgleichung des Zielverfolgungssystems, insbesondere des Zielestimators Ze und des Servoestimators Se unter Berücksichtigung ihrer Kopplung über die Zielbewegung und die Multiplikatoren Mui. Diese Riccati-Gleichung ist an sich eine deterministische Gleichung für die deterministischen Variablen Vaikl, welche Eigenschaften der stochastischen Signale ai beschreiben. Erfindungsgemäss werden nun aber die Elemente Vaikl nicht mehr als deterministische Variablen, sondern ebenfalls als stochastische Signale behandelt, welche also nicht nur deterministischen, sondern auch stochastischen (d.h. zufälligen) zeitlichen Aenderungen unterliegen. Diese zufälligen Aenderungen werden in bekannter Weise als Zusatz zur Riccati-Gleichung modelliert. Daraus entsteht eine stochastische Differentialgleichung, welche über wohlbekannte algebraische Transformationen zum Varianzestimator Ve führt. Dieser ist allerdings viel komplizierter als der Zielestimator Ze und der Servoestimator Se und sollte deshalb mit den bekannten Methoden der Modell-Reduktion vereinfacht werden. Wenn diese Vereinfachung nicht allzu weit geht, erlaubt der Varianzestimator Ve die Schätzung der Varianz Vai von stochastischen Signalen ai, welche zwar ergodisch, nicht aber stationär sein müssen.

Als Beobachtung bzw. Messung der Zustandsvariablen Vaikl des Varianzestimators Ve dient das Produkt aik.ail der beiden entsprechenden skalaren Elemente aik und ail des Ablagevektors ai. Der Beobachtungsfehler bzw. Messfehler fkl der Beobachtung aik•ail ist ihre Abweichung

$$fkl = aik•ail - Vaikl \qquad (41)$$

Die Kovarianz von fkl mit einem andern Beobachtungsfehler fmn ist

$$Vfklmn = E[(aik \cdot ail - Vaikl) \cdot (aim \cdot ain - Vaimn)]$$
$$= E[aik \cdot ail \cdot aim \cdot ain + Vaikl \cdot Vaimn$$
$$- aik \cdot ail \cdot Vaimn - aim \cdot ain \cdot Vaikl]$$
$$= E[aik \cdot ail \cdot aim \cdot ain] - Vaikl \cdot Vaimn$$
$$= Vaimk \cdot Vainl + Vaiml \cdot Vaink = Vfklmn \qquad (42)$$

wenn die 4 Ablagen aik, ail, aim und ain Gaussverteilt und mittelwertfrei sind, weil dann ihr

4. Moment
$$E[alk \cdot ail \cdot aim \cdot ain] = Vaikl \cdot Vaimn + Vaimk \cdot Vainl + Vaiml \cdot Vaink \qquad (43)$$

ist (während fkl und fmn nicht Gauss-verteilt sind). Die Varianz (statt Kovarianz) von fkl ergibt sich aus dem Spezialfall $k = m$ und $l = n$. Zwar sind die Varianzen in Gleichung (42) nicht bekannt, sondern gesucht, aber der Varianzestimator Ve selber liefert Schätzwerte dafür, ebenso wie die Varianz der Schätzfehler dieser Schätzungen, woraus man durch partielle Differentiation der Unbekannten von Gleichung (37) nach (den Elementen von) Vai und Multiplikation mit (den Elementen von) $Vf^{\frac{1}{2}}$ die Genauigkeit der Bestimmung dieser Unbekannten berechnen kann.

Scheut man sich nicht, den Varianzestimator Ve extrem zu vereinfachen, so kann man ihn auch als ein Matrix-$C_1$-$C_2$-Filter pro Visierlinie gestalten:

$$Vai_{(t+1)} = C_1 \cdot Vai_{(t)} + C_2 \cdot ai \cdot ai' \qquad (44)$$

Es ist dies die bekannte Gleichung für ein Tiefpaßfilter 1. Ordnung.

In Gleichung (44) ist die Matrix $Vai_{(t+1)}$ der neueste Schätzwert für die Ablagevarianz Vai im Zeitpunkt $t+1$, $Vai_{(t)}$ der bisherige Schätzwert vom Zeitpunkt t und ai der neueste Ablagevektor im Zeitpunkt $t+1$. Die skalaren Filterkoeffizienten $C_1$ und $C_2$ sind geeignet zu wählen, beispielsweise in Anlehnung an einen weniger stark vereinfachten Varianzestimator, wobei vorzugsweise

$$C_1 + C_2 = 1 \qquad (45)$$

6. <u>Zielidentifikation</u>

Radargeräte für kleinkalibrige Rohrflab oder andere Effektoren mit entsprechend geringer Reichweite haben Messfehler ãi, die überwiegend durch Glitzerrauschen verursacht werden.

Der Punkt mit den Koordinaten

$$a = H^{\$} \cdot (\hat{a}i + \tilde{a}i) = \hat{a} + H^{\$} \cdot \tilde{a}i \qquad (46)$$

im Koordinatensystem der wahren Ablage â wäre momentaner Reflexionsschwerpunkt aller Radarwellen, wenn der (mittels der Moore-Penrose-Pseudoinversen $H^{\$}$ von H) transformierte Messfehler $H^{\$} \cdot \tilde{a}i$ mit der Varianz

$$\tilde{V}a = E[H^{\$} \cdot \tilde{a}i \cdot \tilde{a}i' \cdot H^{\$'}] = H^{\$} \cdot \tilde{V}ai \cdot H^{\$'} \qquad (47)$$

mit der Determinanten $\det(\tilde{V}a)$ ausschliesslich durch Glitzerrauschen verursacht würde. Diese Reflexionsschwerpunkte haben die Verteilungsdichte

$$pr = \frac{\exp[-(a-\hat{a})' \cdot \tilde{V}a^{-1} \cdot (a-\hat{a})/2]}{2 \cdot \pi \cdot [\det(\tilde{V}a)]^{\frac{1}{2}}} \qquad (48)$$

falls sie gaussverteilt sind. Somit umrandet die Ellipse mit der Gleichung

$$(a-\hat{a})' \cdot \tilde{V}a^{-1} \cdot (a-\hat{a}) = 1 \qquad (49)$$

einen grossen Teil der Silhouette des Ziels. Diese zweidimensionale Silhouette hängt ab von der dreidimensionalen Form des Ziels sowie von seiner (Flug-) Lage, welch letztere sich aus der Schätzung ez des Bewegungszustandes des Ziels berechnen lässt. Auch bei andern Zielsensoren kann man so aus den beiden Eigenvektoren der transformierten Messfehlervarianz $\tilde{V}a$ oder aus den Eigenvektoren der Messfehlervarianz $\tilde{V}ai$ auf die Art des Ziels schliessen und beispielsweise (unbemannte) Lenkwaffen von (bemannten) Bombern unterscheiden. Dabei sollte man allerdings berücksichtigen, dass die hier behandelten Messfehler bzw. Sensorfehler primär von Winkel-Sensoren stammen, und dass die winkelmässige Ausdehnung der erwähnten Ziele umgekehrt proportional zu ihrer Distanz ist.

Lenkwaffen unterscheiden sich von Bombern nicht nur durch ihre Ausdehnung, sondern auch durch ihr Flugverhalten. Wenn der Zielestimator Ze die Messfehlervarianz $\tilde{V}ai$ der Zielsensoren und das Flugverhalten des Ziels kennt, kann er dessen Bewegungszustand genauer schätzen.

Auch der Regler R kann die Verfolgungssicherheit des Servos S genauer maximieren, wenn er die Ausdehnung des Ziels kennt, soweit dieses die Echos erzeugt, welche von den Zielsensoren empfangen werden.

Schliesslich kann auch ein Zielbekämpfungssystem nach Anspruch 5 taktisch sinnvoller eingesetzt werden, wenn die verwundbare Ausdehnung des Ziels und damit die Treffwahrscheinlichkeit der Geschosse bekannt ist.

7. Systeminversion

Der Ausgang des gemäss Abschnitt 2.3 und Figur 2b zu invertierenden Systems ist der scheinbare Verfolgungsfehler e. Dieser Vektor e enthält Schätzwerte der wahren Ablagen $\hat{a}$ bzw. Verfolgungsfehler $\hat{e}$ gemäss den Gleichungen (1) und (2) für alle Visierlinien und mindestens einen Gültigkeitszeitpunkt. Diese Schätzwerte e von Positionsdifferenzen sind eine Funktion der Schätzwerte ez und es der Bewegungszustände von Ziel und Servo. Diese Schätzwerte ez und es wie auch die Steuersignale mi sind nicht Eingänge des zu invertierenden Systems, sondern interne Kopplungen, welche durch Messfehler sowie durch unerwartete Zielbewegungen und Plattformbewegungen gestört werden. Erwartete Zielbewegungen und Plattformbewegungen werden vom zu invertierenden System erzeugt.

Der Eingang des zu invertierenden Systems besteht aus dem vektoriellen Regelsignal r, welches der Regler R für mindestens einen Gültigkeitszeitpunkt so berechnet, dass der Ausgang e des zu invertierenden Systems gleich Null wird, wenn keine Störungen auftreten. Somit kann gemäss Fig. 2b der Regler R als inverses System mit Eingang Null betrachtet werden.

Das zu invertierende System sei nun dargestellt durch die Differenzen-Gleichungen (51) und (52).

xn = ft(xa) + Gr•r     (51)

e = He•x bzw. ea = He•xa bzw. en = He•xn     (52)

Darin sei xa der alte Wert des Zustandsvektors x im Zeitpunkt t, wobei x aus den Zustandsvektoren der Zielbewegung, des Zielestimators Ze, der Servobewegung und des Servoestimators Se besteht. Dabei werden vorzugsweise die Modellierfehler des Zielestimators Ze und des Servoestimators Se vernachlässigt, sodass ihre Zustandsvektoren immer gleich jenen der Zielbewegung bzw. der Servobewegung sind. Der Vektor xn sei der neue Wert des Zustandsvektors x im Zeitpunkt t+1, d.h. um einen Takt später als t. Die vektorielle Transitionsfunktion ft(xa) sei nichtlinear, weil das Ziel und besonders der Servo S aus Körpern

17

bestehen, welche sich nicht nur translatorisch, sondern auch rotatorisch bewegen. Hingegen seien der Einfluss des Eingangs r auf den Zustandsvektor x und der Einfluss des Zustandsvektors x auf den Ausgang e linear, was durch die Matrizen Gr und He dargestellt wird. Diese Voraussetzung ist zumindest bei stationärer Zielverfolgung erfüllt, weil dann der Eingang r und besonders der Ausgang e dank der Vorarbeit der Multiplikatoren Mui klein sind.

Aus den Gleichungen (51) und (52) folgt:

$$en = He \cdot xn = He \cdot (ft(xa) + Gr \cdot r)$$
$$= He \cdot ft(xa) + He \cdot Gr \cdot r \qquad\qquad\rightarrow\qquad\qquad (53)$$

$$r = (He \cdot Gr)^{\$} \cdot [en - He \cdot ft(xa)] \qquad (54)$$

$(He \cdot Gr)^{\$}$ sei die Inverse $(He \cdot Gr)^{-1}$ der Matrix $He \cdot Gr$, falls diese invertierbar, d.h. quadratisch und vollrangig ist. Dann ist der Ausgang des zu invertierenden Systems genau gleich e, wenn sein Eingang r gemäss Gleichung (54) berechnet wird, und wenn keine Störungen auftreten. Somit ist (54) mit en = 0 die Gleichung des Reglers R. Daraus liesse sich He eliminieren, wenn Gr invertierbar wäre, was aber kaum je zutrifft. Man beachte, dass die Transitionsfunktion ft(xa) nicht invertiert werden muss. Hingegen verwendet der Regler R den Zustandsvektor xa, beispielsweise aus einem eigenen Modell des zu invertierenden Systems oder vorzugsweise vom Zielestimator Ze und vom Servoestimator Se.

Ist die Matrix $He \cdot Gr$ nicht invertierbar, so wähle man als $(He \cdot Gr)^{\$}$ eine geeignete Pseudoinverse, welche ein vernünftig gewichtetes Mittel der Varianzen der Elemente von e und/oder r minimal macht, auch unter Berücksichtigung von Störungen, z.B. in Anlehnung an die Gleichungen (66) und (69).

Ist die Zielverfolgung instationär, z.B. bei starken Manövern oder kurz nach Erfassung des Ziels, so werden möglicherweise die Stellsignale r nach Gleichung (54) grösser als ihre zulässigen Werte. Dann verwende man statt der Gleichungen (51) und (52) den allgemeineren Ansatz (55):

$$e = fg(r) \qquad (55)$$

Darin umfasst der scheinbare Verfolgungsfehler e vorzugsweise einen Gültigkeitszeitraum in der Zukunft, welcher länger ist als eine abklingende Stossantwort des zu invertierenden Systems. Das Regelsignal bzw. Stellsignal r besteht aus zwei Teilvektoren rb und ru und umfasst vorzugsweise den gleichen Gültigkeitszeitraum und soviele Gültigkeitszeitpunkte, dass ru weniger Elemente hat als e, damit keine versteckten Schwingungen zwischen den Gültigkeitszeitpunkten von e möglich sind. Durch Integration der Differentialgleichungen des zu invertierenden Systems ausgehend von den Anfangsschätzungen ez und es - kann man zu einem gegebenen "Fahrplan" r den dadurch bewirkten scheinbaren Verfolgungsfehler e berechnen. Somit kann man durch iterative Inversion nach Newton der nichtlinearen Vektorfunktion fg auch aus einem gegebenen scheinbaren Verfolgungsfehler e die dafür notwendigen Stellsignale r berechnen. Das gilt insbesondere auch für e = 0. Zu Beginn dieses Verfahrens ist die Zahl der Elemente des bekannten Teilvektors rb gleich Null. Ueberschreitet ein Element des unbekannten Teilvektors ru nach einem Iterationsschritt seinen gerade noch zulässigen Wert, so wird es gleich diesem Grenzwert gesetzt. Gleichzeitig wird es von einem Element des unbekannten (d.h. nach Newton zu berechnenden) Teilvektors ru zu einem Element des bekannten Teilvektors rb. Wenn nötig, wird auch die Zahl der Gültigkeitszeitpunkte von ru erhöht und der Gültigkeitsbereich von e entsprechend in die Zukunft verschoben. Wenn alles gut geht, konvergiert diese Iteration gegen einen zeitoptimalen Fahrplan r, dessen Teilvektor rb Grenzwerte enthält, während sein Teilvektor ru zulässige Werte enthält, wobei die Gültigkeitszeitpunkte von rb und ru bunt gemischt sind. Der Fahrplan r dient nur solange zur Steuerung der steuerbaren Drehachsen des Servos S und des Servoestimators Se, bis neue Sensorsignale a, d oder c eintreffen, denn dann wird r neu bestimmt.

Wird die Zielverfolgung allmählich stationär, so tendieren Elemente des Teilvektors ru gegen Grenzwerte, die entgegengesetzt zu den Werten von zeitlich benachbarten Elementen des Teilvektors rb sind, weshalb diese gestrichen werden können. Ist ihre Zahl auf Null gesunken, so berechne man vorzugsweise r = ru neu wie folgt: Eine Taylor-Entwicklung 1. Ordnung von Gleichung (55) um den Arbeitspunkt

$$eo = fg(ro) \qquad (56)$$

führt zu

$$e=eo+el=fg(ro+rl)\approx fg(ro)+\frac{\partial fg}{\partial r}\bigg|_{r=ro}\cdot rl=eo+F\cdot rl \quad (57)$$

Dabei ist ro für ein nahezu lineares System vorzugsweise gleich Null.

Im Rahmen der Newton-Iteration wurde bereits die Matrix F der partiellen Ableitung des scheinbaren Verfolgungsfehlers e nach dem Regelsignal r näherungsweise bestimmt und der Schritt rl in r berechnet zu

$$rl = (F'\cdot F)^{-1}\cdot F'\cdot el \quad (58)$$

falls F vollrangig war, und falls e bzw. el mehr Elemente hatte als r bzw. rl. War hingegen F quadratisch, so wurde Gleichung (58) zu

$$rl = F^{-1}\cdot el = F^{-1}\cdot(e - eo) \quad (59)$$

Der scheinbare Verfolgungsfehler e ist eine Schätzung des wahren Verfolgungsfehlers ê, deren Schätzfehler

$$\tilde{e} = e - \hat{e} \quad\quad\quad (60)$$

durch Störungen verursacht wird wie z.B. Messfehler sowie unerwartete Bewegungen von Ziel und Plattform. Die Varianz

$$\tilde{V} = E[\tilde{e}\cdot\tilde{e}'] \quad\quad\quad (61)$$

des Schätzfehlers $\tilde{e}$ lässt sich berechnen durch Integration der entsprechenden Matrix-Riccati-Differentialgleichung des zu invertierenden Systems, ausgehend von den Varianzen $\tilde{V}z$ und $\tilde{V}s$ der Schätzfehler $\tilde{e}z$ und $\tilde{e}s$ der Bewegungszustände ez und es von Ziel und Servo, wie sie vom Zielestimator Ze und vom Servoestimator Se als Nebenprodukte geliefert werden, falls sie (Extended) Kalman-Bucy-Filter sind.

Ist der Schätzfehler $\tilde{e}$ mittelwertfrei und Gaussverteilt, so ist die Wahrscheinlichkeit pe, dass der wirkliche Verfolgungsfehler ê zwischen ê und ê + dê liegt

$$pe=exp[-(\hat{e}-e)'\cdot\tilde{V}^{-1}\cdot(\hat{e}-e)/2]\cdot[(2\cdot\pi)^n\cdot det(\tilde{V})]^{-\frac{1}{2}}\cdot d\hat{e} \quad (62)$$

wenn dê infinitesimal klein ist und ê genau n Elemente enthält, wobei $det(\tilde{V})$ die Determinante der Varianzmatrix $\tilde{V}$ des Schätzfehlers

$$\tilde{e} = \hat{e} - e$$

darstellt.

Die Wahrscheinlichkeit, dass der wirkliche Verfolgungsfehler ê (auch beim Sensor mit dem engsten Messbereich pro Visierlinie) zu keinem Messwertverlust führt, sei

$$Ps = exp(-\hat{e}'\cdot A^{-1}\cdot\hat{e}/2) \quad (63)$$

Dabei stellt die positiv definite und vorzugsweise symmetrische Matrix A ein Mass dar für die (winkelmässigen) Ausdehnungen von Ziel und Messbereich und deren relative Lage bezüglich Distanz und Aspektwinkel sowie die Verteilung des Aspektwinkels und seiner Geschwindigkeit. Hinweise für die Ausdehnung des Ziels ergeben sich gemäss Abschnitt 6 aus der Varianz $\tilde{V}ai$ der Ablagefehler $\tilde{a}i$.

Damit wird die Wahrscheinlichkeit P, dass (beim Zielsensor mit dem engsten Messbereich pro Visierlinie) überhaupt kein wirklicher Verfolgungsfehler ê zu einem Messwertverlust führt,

$$P = \int_\infty Ps \cdot pe = [\det(A)/\det(A+\tilde{V})]^{\frac{1}{2}} \cdot \exp[-e' \cdot (A+\tilde{V})^{-1} \cdot e/2] \qquad (64$$

Für feste Matrizen A und $\tilde{V}$ wird der scheinbare Verfolgungsfehler e klein und die Wahrscheinlichlichkeit P maximal, wenn die quadratische Form

$$Q = e' \cdot (A+\tilde{V})^{-1} \cdot e = (F \cdot rl + eo)' \cdot (A+\tilde{V})^{-1} \cdot (F \cdot rl + eo) \qquad (65)$$

minimal wird, wenn also

$$rl = - [F' \cdot (A+\tilde{V})^{-1} \cdot F]^{-1} \cdot F' \cdot (A+\tilde{V})^{-1} \cdot eo \qquad (66)$$

wird.

Die Belastung des Servos S durch seine Ansteuerung mit rl lässt sich berücksichtigen, indem man Q aus Gleichung (65) erweitert zu

$$Q = e' \cdot (A+\tilde{V})^{-1} \cdot e + b' \cdot C \cdot b \qquad (67)$$

Dabei sei die Belastung b - ähnlich wie der scheinbare Verfolgungsfehler e - eine lineare Funktion des linearen Teils rl des Regelsignals r, nämlich

$$b = B \cdot rl + bo \qquad (68)$$

während die Gewichtsmatrix C vorzugsweise aufgefasst und vorgegeben wird als Varianzmatrix einer besonders unerwünschten Art der Belastung b, (z.B. weil diese Struktur-Resonanzen anregt oder gegen Grenzwerte tendiert), bzw. als Inverse der Varianzmatrix einer besonders harmlosen Art, bzw. als Mischung von beidem. Damit wird Q minimal für

$$rl = -[F' \cdot (A+\tilde{V})^{-1} \cdot F + B' \cdot C \cdot B]^{-1} \cdot [F' \cdot (A+\tilde{V})^{-1} \cdot eo + B' \cdot C \cdot bo] \qquad (69)$$

Das ist die für stationäre Zielverfolgung sinnvollste Art, die wahren Verfolgungsfehler ê und die Belastung b des Servos S klein zu halten, obwohl dabei das System nicht genau invertiert wird. Die entsprechende maximale Verfolgungssicherheit lässt sich aus den Gleichungen (69), (57) und (64) berechnen und die Servobelastung aus Gleichung (68).

8. Residuen und Memo

Die Berechnung der Varianz $\tilde{V}$ des Schätzfehlers $\tilde{e}$ des scheinbaren Verfolgungsfehlers e gemäss Gleichung (61) eröffnet nun eine weitere Möglichkeit (neben der robusten Matrix gemäss Abschnitt 4.2), Sensorstörungen abzufangen. Dabei umfasse e nur den gegenwärtigen Gültigkeitszeitpunkt. Dann ist gemäss den Gleichungen (1), (2) und (60) der Messfehler

$$\tilde{a}i = ai - \hat{a}i = ai - H \cdot \hat{a} = ai - H \cdot \hat{e} = ai - H \cdot (e - \tilde{e}) = ai - H \cdot e + H \cdot \tilde{e} \qquad (70)$$

Das Residuum ri der Messung ai lässt sich berechnen als

$$ri = ai - H \cdot e = \tilde{a}i - H \cdot \tilde{e} \qquad\qquad (71)$$

und hat gemäss Gleichung (71) die Varianz

$$Vri = E[ri \cdot ri'] = \tilde{V}ai + H \cdot \tilde{V} \cdot H' \qquad\qquad (72)$$

falls der Schätzfehler $\tilde{e}$ des scheinbaren Verfolgungsfehlers e nicht korreliert ist mit dem Messfehler $\tilde{a}i$ der Messung ai, was dann zutrifft, wenn die Messfehler $\tilde{a}i$ zeitlich nicht korreliert sind. Ist das Residuum ri mittelwertfrei und gaussverteilt, so ist das Quadrat $rij^2$ seines j-ten Elements rij mit 99.73%-iger Wahrscheinlichkeit kleiner als $9 \cdot Vrijj$ (wobei Vrijj das entsprechende Diagonalelement der Residuenvarianz Vri darstellt), falls keine unerwarteten Sensorstörungen auftreten. Falls diese Bedingung nicht erfüllt ist, bzw. falls rij zu gross ist, oder falls aus irgendeinem andern Grund das entsprechende Element aij der Messung ai ausfällt oder nicht vertrauenswürdig erscheint, wird erfindungsgemäss rij durch Null ersetzt und anschliessend ai durch ri + $H \cdot e$, zumindest für die Verarbeitung von ai durch den Zielestimator Ze. Falls dieser Ersatz für den Multiplikator Mui zu lange dauert, wird einfach die j-te Kolonne der Matrix Mai gleich Null gesetzt. Dieser Memo-Betrieb (d.h. Zielverfolgung aufgrund der in der Form des scheinbaren Verfolgungsfehlers e im Gedächtnis gespeicherten früheren Messungen) ist deshalb sinnvoll, weil ri sich nach Gleichung (71) einerseits aus den im Normalbetrieb bekannten Grössen ai und e und andererseits aus ihren mittelwertfreien Fehlern $\tilde{a}i$ und $\tilde{e}$ zusammensetzt, denn der beste Schätzwert für eine mittelwertfreie Zahl ist Null, wenn man sonst nichts von ihr weiss.

Dieses Verfahren, das hier am Beispiel eines Zielsensorsignals beschrieben wurde, ist für den Zielestimator Ze auch auf Lagesensorsignale anwendbar.

## 9. Ueberwachungsgerät U

Bevor eine Zielverfolgung beginnen kann, muss das Ziel in den Messbereich von mindestens einem Zielsensor gelangen. Befinden sich mehrere Ziele innerhalb der Reichweite des Zielverfolgungssystems, so muss das wichtigste (z.B. das bedrohlichste) davon erkannt und ausgewählt werden. Zu diesem Zweck überwacht das Gerät U den gesamten Raum, worin Ziele auftauchen können, indem es diesen Raum mit Suchsensoren periodisch abtastet. Solche Suchsensoren sind heute zumeist Suchradars, also aktiv. Für militärische Anwendungen werden zum Zwecke der Tarnung in Zukunft vermehrt passive Suchsensoren eingesetzt werden, z.B. Wärmebildkameras und akustische Sensoren. Hat das Ueberwachungsgerät U ein Ziel entdeckt und ausgewählt, so steuert es mit seinem Einweisungssignal u den Servo S und gleichartig auch den Servoestimator Se so, dass das Ziel in den Messbereich der Zielsensoren gerät. Schon vorher hat der Servoestimator Se dauernd den Servo S beobachtet und seinen Bewegungszustand es geschätzt. Diese Schätzung es kann das Ueberwachungsgerät U ähnlich wie der Regler R verwenden, um den Servo S besonders rasch und genau zu bewegen. Ebenso kann das Ueberwachungsgerät U die Lagesensorsignale c verwenden, falls der Servoestimator Se (noch) nicht bereit, bzw. seine Schätzung es (noch) ungenau ist. Vorzugsweise wird das Einweisungssignal u ähnlich wie das Regelsignal r durch Systeminversion berechnet und ihm via Summatoren überlagert.

## 10. Symbolliste

a Ablage eines Reflexlonsschwerpunktes
â Wahre Ablage des Ziels Von der i-ten Visierlinie
$\bar{a}$ Schätzung der Ablage â
ai Messung der Ablage â
âi würde von fehlerfreien Winkelsensoren gemessen
$\tilde{a}i$ Fehler der Messung ai
$\bar{a}i$ Schätzung von âi
$\mathring{a}i = \bar{a}i - âi$ = Schätzfehler von $\bar{a}i$
aik k-te skalare Komponente von ai

ail l-te skalare Komponente von ai

aim m-te skalare Komponente von ai

ain n-te skalare Komponente von ai

a11 Ablage im Seiten-Winkel des 1. Radarempfängers

a12 Ablage im Höhen-Winkel des 1. Radarempfängers

a13 Ablage im Seiten-Winkel des 2. Radarempfängers

a14 Ablage im Höhen-Winkel des 2. Radarempfängers

A Matrix der Ausdehnungen von Ziel und Messbereich

b Belastung von S durch rl

bo Belastung von S für rl = 0

B Matrix der linearen Abhängigkeit von b von rl

c Lagesensorsignal, Messung des Bewegungszustands von S

c1 Erster Filterkoeffizient für Schützung der Varianz Vai

c2 Zweiter Filterkoeffizient für Schützung der Varianz Vai

C Matrix der quadratischen Abhängigkeit von Q von b

di Messung der Zieldistanz durch Di

Di i-ter Distanzsensor

e scheinbarer Verfolgungsfehler

ê wirklicher Verfolgungsfehler

ẽ = e-ê = Schätzfehler von e

edi Schätzung des Zieldistanz-Bewegungszustandes für Di

êi wahre Position der Drehachsen von S

ēi Schätzung von êi

es Schätzung des Bewegungszustandes von S

ês wirklicher Bewegungszustand von S

ez Schätzung des Bewegungszustandes des Ziels

eo scheinbarer Verfolgungsfehler für rl = 0

E Operator der Erwartungswertbildung

fg generelle Funktion e von grossen Signalen r

fkl Beobachtungsfehler der Kovarianz von aik und ail

fmn Beobachtungsfehler der Kovarianz von aim und ain

ft Zustandstransitionsfunktion des zu invertierenden Systems

F Matrix der linearen Abhängigkeit von e von rl

G Matrix der linearen Abhängigkeit der âi unter sich

Gr Eingangstransformationsmatrix des zu invertierenden Systems

H Matrix der linearen Abhängigkeit von âi von â

He Ausgangstransformationsmatrix des zu invertierenden Systems

i Zähler der Visierlinien

j Zähler der Visierlinien oder der Elemente von ai und ri

J Schätzmatrix für āi aus ai

k relative Kennliniensteilheit

kα relative Kennliniensteilheit im Seitenwinkel

kλ relative Kennliniensteilheit im Höhenwinkel

l relative Kennliniensteilheit

lα relative Kennliniensteilheit im Seitenwinkel

lλ relative Kennliniensteilheit im Höhenwinkel

L Matrix der linearen Abhängigkeit der â = ê von den êi

mi = Mai•ai = gedrehtes und gewichtetes Sensorsignal für S und Se

Mai Matrix zum Multiplikator Mui

Mui Multiplikator für Drehung bzw. Wichtung der ai

n Zahl der Elemente von e

ni Zahl der Elemente von ai

N Nullmatrix

pe Wahrscheinlichkeit von ê

pr Verteilungsdichte der Reflexionsschwerpunkte

P Verfolgungswahrscheinlichkeit ohne Kenntnis von ê

Pa Wahrscheinlichkeit der besten Signalauswahl

Ps Verfolgungswahrscheinlichkeit mit Kenntnis von ê

q Mass für die Güte der Zielsensoren

Q Quadrätische Form für P und mit b

r (Zustands-) Regelsignal

rb bekannter Teilvektor von r

rl r-ro = kleine Abweichung von ro

ri Residuum der Messung ai

ru unbekannter Teilvektor von r

ro Arbeitspunkt für fg(r)

R (Zustands-) Regler

Se Estimator des Bewegungszustands von S

si Steuersignal von Se für Mui

S Servo für alle Visierlinien

Si Teilservo für die i-te Visierlinie

t Zeit

u Ausgangssignal von U

U Ueberwachungsgerät mit Suchsensoren, z.B. Suchradar

$\tilde{V}$ Varianz des Schätzfehlers $\tilde{e}$ von e

$\tilde{V}a$ Varianz des transformierten Messfehlers $H^\$ \cdot \tilde{a}i$

Vai Varianz von ai

$\hat{V}ai$ Varianz von $\hat{a}i$

$\tilde{V}ai$ Varianz des Messfehlers $\tilde{a}i$ von $\hat{a}i$

Ve Varianzestimator

Vfklmn Kovarianz von fkl und fmn

Vri Varianz des Residuums ri

$\tilde{V}s$ Varianz des Schätzfehlers $\tilde{e}s$ von es

$\tilde{V}z$ Varianz des Schätzfehlers $\tilde{e}z$ von ez

W imaginärer, redundanzloser und fehlerfreier Winkelsensor der i-ten Visierlinie

Wi Winkelsensoren mit gemeinsamer i-ter Visierlinie

Y Verteil-Matrix für spezielle Pseudoinverse von L

zi Steuersignal von Ze für Mui

Ze Estimator des Bewegungszustands des Zieles

$\alpha$ Seitenwinkel

$\lambda$ Höhenwinkel

$\hat{}$ wahrer Wert

$\sim$ Fehler

$\$$ Pseudo-Inversion (von Rechteck-Matrizen)

' Transposition (von Vektoren und Matrizen)


**Patentansprüche**

1. Zielverfolgungssystem

mit mindestens einem Ziel-Winkelsensor (Wi; i = 1,2,3 ...) zur Vermessung der winkelmäßigen Ablage dargestellt durch vektorielle Ablagesignale (ai; i = 1,2,3 ...) des Ziels von der jeweiligen Visierlinie der Antenne des Ziel-Winkelsensors,

mit mindestens einem Ziel-Distanzsensor (Di; i = 1,2,3 ...) zur Messung der Entfernung zwischen dem Ziel und besagtem Ziel-Distanzsensor, dargestellt durch skalare Distanzsignale ($d_i$; i = 1,2,3 ...),

mit einem Servo (S) zur dauernden Ausrichtung der Antennen der erwähnten Zielsensoren (Wi; Di) auf das Ziel so, daß das Ziel dauernd im Sendebereich bzw. Empfangsbereich dieser Sensoren liegt,

mit einem Servoestimator (Se) zur Schätzung des Bewegungszustandes des Servos (S) mit Hilfe eines Lagesensorsignals (c), wobei der Servoestimator (Se) ein Modell des Servos (S) ist und die gleichen Steuersignale des Ziel-Winkelsensors (Wi) wie der Servo (S) empfängt,

mit einem Zielestimator (Ze) zur Schätzung des Bewegungszustandes des Ziels aufgrund des Lagesensorsignals (c) sowie der Zielsensorsignale (ai; di) aller Zielsensoren (Wi ; Di), wobei der Zielestimator (Ze) ein Modell der Zielbewegung ist,

mit jeweils einem Multiplikator (Mui; i = 1,2,3, ...) zur zeitverzugsarmen Verdichtung und Transformation des vektoriellen Ablagesignals (ai) eines Ziel-Winkelsensors (Wi) in für den Servo (S) und den Servoestimator (Se) gemeinsame vektorielle Steuersignale (mi; i = 1,2,3 ...) als Produkt (Mai . ai ) der Matrix (Mai) des Multiplikators (Mui) mit dem vektoriellen Ablagesignal (ai), wobei die Matrix (Mai) von Einstellungssignalen (Zi, si; i = 1,2,3 ...) aus dem Zielestimator (ze) und dem Servoestimator (Se) abhängt, und

mit einem Regler (R) zur Steuerung des Servos (S) und des Servoestimators (Se) durch ein Steuersignal (r) in Abhängigkeit von der Schätzung (es, $\tilde{V}s$) des Bewegungszustandes des Servos (S), von der Schätzung (ez, $\tilde{V}z$) des Bewegungszustandes des Ziels und von den Matrizen (Mai) der Multiplikatoren (Mui),

wobei der Regler (R) das inverse System zum Zielverfolgungssystem ohne den Regler (R) ist, wodurch er den scheinbaren Verfolgungsfehler (e) als Positionsanteil der Differerz zwischen den Schätzungen der Bewegungszustände des Ziel (ez) und des Servos (es) zu null macht.

**2.** Zielverfolgungssystem nach Anspruch 1,

dadurch gekennzeichnet,

dass die Zielsensoren (Wi; Di)

Sender oder Empfänger von Signalen oder beides zugleich sind,

dass Sender mit gleicher Signallaufzeit vom Sender zum Ziel in jeweils eine Gruppe erster Art mit gleicher Antennenrichtung zusammengefaßt sind,

dass Empfänger mit gleicher Signallaufzeit vom Ziel zum Empfänger in jeweils eine Gruppe zweiter Art mit gleicher Antennenrichtung zusammengefasst sind,

dass Sender und Empfänger in eine Gruppe dritter Art mit gleicher Antennenrichtung zusammengefasst sind, falls ihre gesamte Laufzeit vernachlässigbar klein ist, und falls sie nicht räumlich zu weit voneinander entfernt sind, und

dass der Servo (S) aus Teilservos (Si) besteht mit je mindestens 2 steuerbaren Drehachsen zur Nachführung von je einer der besagten Gruppen-Antennenrichtungen nach dem Ort; wo die Sendesignale das Ziel erreichen werden bzw. die Empfangssignale das Ziel verlassen haben, wobei jede solche Gruppe erster, zweiter oder dritter Art wie ein einziger Sensor betrachtet werden kann.

**3.** Zielverfolgungssystem nach Anspruch 1 oder 2,

gekennzeichnet

durch ein Überwachungsgerät (U) zur Überwachung des gesamten Raums, worin Ziele auftauchen können, und zur gleichartigen Einweisung von Servo (S) und Servoestimator (Se) auf eines dieser Ziele.

**4.** Zielverfolgungssystem nach Anspruch 3,

dadurch gekennzeichnet,

dass das Überwachungsgerät (U) das Lagesensorsignal (c) und/oder die Schätzung (es) aus dem Servoestimator (Se) des Bewegungszustandes des Servos (S) empfängt und zur Verbesserung der Einweisung benutzt.

**5.** Zielverfolgungssystem nach einem der Ansprüche 2 bis 4, angewendet auf das Verschiessen von Geschossen gegen ein Ziel,

gekennzeichnet

durch mindestens einen Teilservo (Si) einer Gruppe erster Art, deren Sender ein Effektor ist, dessen Schussrichtung gleich der Antennenrichtung ist, welche jener Sender benötigt, dessen Sendesignale sich gleich fortbewegen wie die Geschosse des besagten Effektors.

**6.** Zielverfolgungssystem nach einem der vorhergehenden Ansprüche,

gekennzeichnet

durch die Bestimmung der Varianz ($\tilde{V}ai$ ) der Fehler (ãi) aller Ablagesignale (ai) aller Winkelsensorempfänger (Wi) durch eine Bestimmung und Auswertung der Varianz (Vai) aller Ablagesignale (ai) unter Berücksichtigung der linearen Abhängigkeit der Elemente der Ablagesignale (ai).

**7.** Zielverfolgungssystem nach Anspruch 6, dadurch gekennzeichnet,

dass aus der Varianz ($\tilde{V}ai$) der Fehler (ãi) aller Ablagesignale (ai) auf die räumliche Ausdehnung des Ziels geschlossen wird und

dass aus dieser räumlichen Ausdehnung des Ziels auf seinen Typ, sein Flugverhalten und seine Verwundbarkeit geschlossen wird.

**8.** Zielverfolgungssystem nach einem der vorangehenden Ansprüche,
dadurch gekennzeichnet, daß
das vektorielle Steuersignal(mi) eine Schätzung ($\overline{e}i$) jenes vektoriellen Steuersignals ($\hat{e}i$) ist, das die Transformation jenes vektoriellen Ablagesignals ($\hat{a}i$) ist, das von einem gedachten fehlerfreien Winkelsensorempfänger erzeugt wird, wobei die Varianz der Schätzfehler der erwähnten Schätzung ($\overline{e}i$ ) minimal in Anbetracht der Varianz (Vai ) der Ablagesignale (ai) und der Varianz ($\tilde{V}$ai ) der Fehler ($\tilde{a}$i ) der Ablagesignale ist.

**9.** Zielverfolgungssystem nach einem der vorangehenden Ansprüche,
dadurch gekennzeichnet,
dass der Zielestimator (Ze) unter anderem die Varianz ($\tilde{V}$ai) der Fehler ($\tilde{a}$i) der Ablagesignale (ai) und das Flugverhalten des Ziels berücksichtigt und
dass der Regler (R) unter anderem die räumliche Ausdehnung des Ziels berücksichtigt, dergestalt, dass die Wahrscheinlichkeit maximal ist, dass ein genügend grosser Teil des Ziels sich dauernd im Sendebereich bzw. Empfangsbereich der Sensoren (Wi, Di) befindet.

**10.** Zielverfolgungssystem nach einem der vorangehenden Ansprüche,
dadurch gekennzeichnet,
dass jene Komponenten von mindestens einem vektoriellen Ablagesignal (ai) gleichzeitig verschwinden, welche aus Zielechos mit gleicher Wellenlänge bestimmt werden, so lange auf dieser Wellenlänge überhaupt kein genügend starkes Zielecho empfangen werden kann,
dass die Elemente der varianzoptimalen Matrix (Mai) des Multiplikators (Mui) nur zwei verschiedene Werte annehmen würden, wenn der Winkelsensorempfänger (Wi) fehlerfrei wäre, wobei einer dieser beiden Werte gleich Null ist, was bedeutet, dass das entsprechende Matrixelement keine Kopplung zwischen der entsprechenden Drehachse und der entsprechenden Komponente des Ablagevektors (ai) vermittelt, und
dass alle Elemente der wirklichen Matrix (Mai) gleich Null sind mit Ausnahme von je einem Matrixelement pro Zeile bzw. Drehachse, welches gleich Eins ist und jener Komponente des Ablagevektors (ai) entspricht, welche von allen mit der entsprechenden Drehachse gekoppelten Komponenten die absolut kleinste ist, wobei von dieser Auswahl jene Komponenten ausgeschlossen sind, welche gleichzeitig mit allen anderen zur gleichen Wellenlänge gehörenden Komponenten verschwinden.

**11.** Zielverfolgungssystem nach einem der vorangehenden Ansprüche,
dadurch gekennzeichnet,
dass alle Distanzsensoren passiv sind oder zum Zwecke der Tarnung abgeschaltet werden können, und
dass mindestens 2 Winkelsensorempfänger räumlich voneinander so weit entfernt sind, dass ihre Entfernung vom Ziel durch Triangulation bestimmt werden kann.

**12.** Zielverfolgungssystem nach einem der vorangehenden Ansprüche,
dadurch gekennzeichnet,
dass die Vertrauenswürdigkeit einer Sensorsignalkomponente unter anderem durch Vergleich ihres Residuums mit dessen Varianz beurteilt wird,
dass zumindest für den Zielestimator (Ze) das Residuum einer vertrauensunwürdigen Sensorsignal komponente durch Null ersetzt wird, und
dass alle Elemente jener Kolonne der Matrix (Mai) des Multiplikators (Mui), welche einer vertrauensunwürdigen Sensorsignalkomponente mit nicht verschwindendem Residuum entspricht, gleich Null gesetzt werden.

## Claims

**1.** Target-tracking system comprising at least one target-angle sensor (Wi; i = 1, 2, 3, ...) for measuring the angular deviation represented by vectorial deviation signals (ai; i = 1, 2, 3, ...) of a target from a respective line of sight of the antenna of the target-angle sensor,
comprising at least one target-range sensor (Di; i - 1, 2, 3, ...) for measuring the distance between target and said target-range sensor, represented by scalar range signals ($d_i$; i = 1, 2, 3, ...) with a servo (S) for continuous laying of antennae of said target sensors (Wi; Di) towards a target, so that the target is continuously placed within the transmitting range, or receiving range respectively, of these sensors,

comprising a servo estimator (Se) for estimating the state of movement of the servo (S) by means of a position-sensor signal (c), in which respect the servo estimator (Se) is a model of servo (S) and receives the same control signals of the target-angle sensor (Wi) as the servo (S),

comprising a target estimator (Ze) for estimating the state of movement of a target based on position-sensor signals (c) as well as the target-sensor signals (ai; di) of all target sensors (Wi; Di), in which respect the target estimator (Ze) is a model of the target movement,

comprising a respective multiplier (Mui; i = 1, 2, 3, ...) for concentration and transformation with a minimum delay of the vectorial deviation signal (ai) of a target-angle sensor (Wi) into common vectorial control signal (mi; i = 1, 2, 3, ...) for the servo (S) and the servo estimator (Se) as a product (Mai x ai) of the matrix (Mai) of multiplier (Mui) with the vectorial deviation signal (ai), in which respect the matrix (Mai) is dependent on setting signals (Zi, si; i = 1, 2, 3, ...) from the target estimator (ze) and the servo estimator (Se), and

comprising a regulator (R) for controlling the servo (S) and the servo estimator (Se) by means of a control signal (r) in dependence of the estimate (es, $\underset{\sim}{V}s$) of the state of movement of the servo (S), of the estimate (ez, $\underset{\sim}{V}z$) of the state of movement of a target, and of the matrices (Mai) of multpliers (Mui), in which respect the regulator (R) is the inverse system to the target-tracking system without the regulator (R), thereby changing to zero the apparent tracking error (e) as a positional portion of the difference between the estimates of the states of movement of the target (ez) and the servo (es).

2. Target-tracking system according to claim 1, **characterised in that**
the target sensors (Wi; Di) are transmitters or receivers of signals or both at the same time,
transmitters of equal signal travel time from the transmitter to the target are combined respectively in one group of a first type with equal antenna orientation,
receivers of equal signal travel time from the target to the receiver are combined respectively in a group of a second type with equal antenna orientation,
transmitters and receivers are combined in a group of a third type with equal antenna orientation, if their total travel time is negligibly short and if they are not spatially too far apart, and
the servo (S) is composed of component servos (Si) with at least 2 respective controllable rotational axes for directing from the respective group-antennae orientation towards a location in which transmitter signals will arrive at the target, or where the receiver signals will have left the target respectively, wherein each such group of a first, second or third type can be treated as a single sensor.

3. Target-tracking system according to claim 1 or 2, **characterised by**
a monitoring unit (U) for monitoring the entire space in which targets may appear, and for equally directing the servo (S) and the servo estimator (Se) towards one of these targets.

4. Target-tracking system according to claim 3, **characterised in that**
the monitoring unit (U) receives the position-sensor signal (c) and/or the estimate (es) from the servo estimator (Se) of the state of movement of the servo (S) and utilizes it to improve the directing.

5. Target-tracking system according to one of claims 2 to 4, applied to firing projectiles at at a target, **characterised by**
at least one component servo (Si) of a group of the first type, the transmitter of which is an effector, the firing direction of which is equal the antenna orientation which said transmitter requires, the transmitted signals of which move the same way as the projectiles of said effector.

6. Target-tracking system according to one of the above claims, **characterised by**
determining the variance ($\underset{\sim}{V}ai$) of the errors (ãi) of all deviation signals (ai) of all angle-sensor race i vers (Wi) by way of determining and evaluating the variance (Vai) of all deviation signals (ai) whilst taking into account the linear dependency of the elements of the deviation signals (ai).

7. Target-tracking system according to claim 6, **characterised in that**
from the variance ($\underset{\sim}{V}ai$) is concluded the error (ãi) of all deviation signals (ai) relative to the spatial dimension of the target, and from this spatial dimension of the target is concluded its type, its flight behaviour and its vulnerability.

8. Target-tracking system according to one of the above claims, **characterised in that**
the vectorial control signal (mi) is an estimate ($\bar{e}i$) of the vectorial control signal ($\hat{e}i$) which is the

EP 0 276 454 B1

transformation of the vector i a deviation signal (âi) which is produced by an imaginary error-free angle-sensor receiver, wherein the variance of estimate errors of the aforementioned estimate $(\bar{e}i)$ is at a minimum in view of the variance (Vai) of the deviation signals (ai) and the variance $(\tilde{V}ai)$ of the errors (ãi) of the deviation signals.

9. Target-tracking system according to one of the above claims, **characterized in that**
   the target estimator (Ze) takes into account, amongst other things, the variance $(\tilde{V}ai)$ of the errors (ãi) of the deviation signals (ai) and the flight behaviour of a target, and
   the regulator (R) takes into account, amongst other things, the spatial dimension of the target in such a manner that it maximizes the probability of a sufficiently large portion of the target being continuously positioned in the transmitting or receiving range of the sensors (Wi, Di).

10. Target-tracking system according to one of the above claims, **characterized in that**
    those components of at least one vectorial deviation signal (ai) which are determined by target echoes of the same wavelength disappear simultaneously, as long as no sufficiently strong target echo can be received on this wavelength,
    the elements of the variance-optimized matrix (Mai) of multplier (Mui) can assume only two different values in the event that the angle-sensor receiver (Wi) is error-free, in which event one of these two values equals zero, which means that the respective matrix element does not mediate a coupling between the respective rotational axis and the respective component of the deviation vector (ai), and
    all elements of the true matrix (Mai) equal zero with the exception of one each matrix element per line, or rotational axis respectively, which equals one and corresponds with the component of the deviation vector (ai) which is the absolutely smallest of all components coupled to the respective rotational axis, wherein those components are excluded from said selection which disappear simultaneously with all other components associated with the same wavelength.

11. Target-tracking system according to one of the above claims, **characterized in that**
    all range sensors are passive or can be switched off for reasons of concealment, and
    at least 2 angle-sensor receivers are spatially so far apart that their distance to a target can be determined by triangulation.

12. Target-tracking system according to one of the above claims, **characterized in that**
    the reliability of a sensor-signal component can be assessed, for example, by comparison of its residuum with its variance,
    at least for the target estimator (Ze) the residuum of an unreliable sensor-signal component is substituted by zero, and
    all elements of said column of the matrix (Mai) of multiplier (Mui), which corresponds with an unreliable sensor-signal component of a not disappearing residuum, are set to equal zero.

**Revendications**

1. Système de poursuite de cible comportant au moins un capteur d'angle de cible (Wi ; i = 1, 2, 3...) pour mesurer la déviation angulaire représentée par des signaux vectoriels de déviation (ai ; i = 1, 2, 3...) de la cible par rapport à la ligne de visée respective de l'antenne du capteur d'angle de cible,
   - avec au moins un capteur de distance de cible (Di ; i = 1, 2, 3...) pour mesurer l'éloignement entre la cible et le capteur de distance de cible, ci-dessus, représenté par des signaux scalaires de distance ($d_i$ ;di = 1, 2, 3...) avec un asservissement (S) pour aligner en permanence les antennes des capteurs de cibles évoqués (Wi ; Di) sur la cible pour que la cible se trouve en permanence dans la zone d'émission ou la zone de réception de ces capteurs,
   - avec un servo-estimateur (Se) pour évaluer l'état de mouvement de l'asservissement (S) à l'aide d'un signal de capteur de position (c), le servo-estimateur (Se) étant un modèle de l'asservissement (S) et il reçoit les mêmes signaux de commande du capteur d'angle de cible (Wi) que l'asservissement (S),
   - avec un estimateur de cible (Ze) pour évaluer l'état de mouvement de la cible sur la base du signal de capteur de position (c) ainsi que des signaux de capteur de cible (ai ; di) de tous les capteurs de cible (Wi ; Di) et l'estimateur de cible (Ze) étant un modèle du mouvement de la cible,

27

- avec chaque fois un multiplicateur (Mui ; i = 1, 2, 3,...) pour la compression et la transformation avec faible retard du signal vectoriel de déviation, vectoriel (ai) d'un capteur d'angle de cible (Wi) dans des signaux vectoriels de commande (mi ; i = 1, 2, 3)...) communs à l'asservissement (S) et au servo-estimateur (Se), comme produit (Mai . ai) de la matrice (Mai) du multiplicateur (Mui) avec le signal de déviation vectoriel (ai), la matrice (Mai) dépendant des signaux de réglage (Zi, si ; i = 1, 2, 3 ...) de l'estimateur de cible (ze) et du servo-estimateur (Se), et
- un régulateur (R) pour commander l'asservissement (S) et le servo-estimateur (Se) par un signal de commande (r) en fonction de l'évaluation (es, $\tilde{V}$s) de l'état de mouvement de l'asservissement (S), de l'évaluation (ez, $\tilde{V}$z) de l'état de mouvement de la cible et des matrices (Mai) des multiplicateurs (Mui),
- le régulateur (R) étant le système inverse du système de poursuite de cible sans le régulateur (R), de se fait annule l'erreur de poursuite apparente (e) comme partition de position de la différence entre l'évaluation des états de mouvement de la cible (ez) et de l'asservissement (es).

2. Système de poursuite de cible selon la revendication 1, caractérisé en ce que :
- les capteurs de cible (Wi, Di) sont des émetteurs ou des récepteurs de signaux ou les deux réunis,
- les émetteurs correspondant à un temps de parcours de signal, identique, entre l'émetteur et la cible, étant réunis chaque fois en un groupe du premier type avec la même direction d'antenne,
- les récepteurs avec le même temps de parcours de signal entre la cible et le récepteur étant réunis chaque fois dans un groupe de second type avec la même direction d'antenne,
- des émetteurs et des récepteurs sont réunis dans un groupe de troisième type pour la même direction d'antenne, dans le cas où le temps de parcours total est suffisamment petit pour être négligé et dans le cas où ils ne sont pas trop éloignés dans l'espace et
- l'asservissement (S) se compose d'asservissements partiel (Si) avec chaque fois au moins deux axes de rotation commandés pour la poursuite de chaque fois l'une des directions d'antenne de groupe suivant le lieu où les signaux d'émission atteignent la cible où les signaux de réception quittent la cible, chaque groupe du premier, du second ou du troisième type pouvant être considéré comme un seul capteur.

3. Système de poursuite de cible selon la revendication 1 ou 2, caractérisé par un appareil de surveillance (U) pour surveiller l'ensemble de l'espace dans lequel peuvent arriver des cibles et pour diriger de la même manière l'asservissement (S) et le servo-estimateur (Se) sur cette cible.

4. Système de poursuite de cible selon la revendication 3, caractérisé en ce que l'appareil de surveillance (U) reçoit le signal de capteur de position (c) et/ou l'évaluation (es) du servoestimateur (Se) de l'état de mouvement de l'asservissement (S) et l'utilise pour améliorer la mise en place.

5. Système de poursuite de cible selon l'une des revendications 2 à 4, appliqué au tir de projectiles vers une cible, caractérisé en ce qu'au moins un asservissement partiel (Si) d'un groupe du premier type, dont l'émetteur est un effecteur, dont la direction de tir est égale à la direction de l'antenne que nécessite l'émetteur dont les signaux d'émission avancent de la même manière que les projectiles de l'effecteur.

6. Système de poursuite de cible selon l'une des revendications précédentes, caractérisé par la determination de la variance ($\tilde{V}$ai) des erreurs (ãi) de tous les signaux de déviation (ai) de tous les récepteurs de capteur d'angle (Wi) par détermination et evaluation de la variance (Vai) de tous les signaux de déviation (ai) en tenant compte de la relation linéaire des éléments des signaux de déviation (ai).

7. Système de poursuite de cible selon la revendication 6, caractérisé en ce qu'à partir de la variance ($\tilde{V}$ai) des erreurs (ãi) de tous les signaux de déviation (ai) on conclut sur l'extension spatiale de la cible et à partir de cette extension spatiale de la cible on conclut quant à son type, son comportement en vol et sa vulnérabilité.

8. Système de poursuite de cible selon l'une des revendications précédentes, caractérisé en ce que le signal vectoriel de commande (mi) est une évaluation ($\overline{e}$i) de chaque signal vectoriel de commande (êi) qui est la transformation de chaque signal vectoriel de déviation (âi) généré par un récepteur de capteur d'angle sans défaut, la variance des erreurs d'évaluation de l'évaluation ($\overline{e}$i) évoquée ci-dessus étant minimale en considérant la variance (Vai) des signaux de déviation (ai) et la variance ($\widetilde{\text{V}}$ai) des erreurs (ãi) des signaux de déviation.

9. Système de poursuite de cible selon l'une des revendications précédentes, caractérisé en ce que l'estimateur de cible (Ze) tient compte entre autre de la variance ($\widetilde{\text{V}}$ai) des erreurs (ãi) des signaux de déviation (ai) et du comportement en vol de la cible et en ce que le régulateur (R) tient compte entre autre de l'extension spatiale de la cible de façon que la probabilité soit maximale pour qu'une partie suffisamment grande de la cible se trouve en permanence dans la zone d'émission ou la zone de réception des capteurs (Wi, Di).

10. Système de poursuite de cible selon l'une des revendications précédentes, caractérisé en ce que :
   - les composants d'au moins un signal vectoriel de déviation (ai) qui disparaîssent simultanément s'ils ont été déterminés à partir d'échos de cibles avec la même longueur d'onde aussi longtemps que sur cette longueur d'onde on ne reçoit pas d'écho de cible suffisamment fort,
   - les éléments de la matrice optimale en variance (Mai) du multiplicateur (Mui) ne prendraient que deux valeurs différentes si le récepteur du capteur d'angle (Wi) étant sans erreur, l'une de ces deux valeurs est égale à zéro, ce qui signifie que l'élément de matrice correspondant n'assure pas de couplage entre l'axe de rotation correspondant et la composante correspondante du vecteur de déviation (ai), et
   - en ce que tous les éléments de la matrice (Mai), réalisés sont égaux à zéro à l'exception d'un élément de matrice par ligne ou par axe de rotation qui est égal à un et correspond à la composante du vecteur de déviation (ai) qui est absolument la plus petite parmi toutes les composantes couplées aux axes de rotation correspondants, la sélection étant exclue pour les composantes qui disparaissent en même temps avec toutes les autres composantes correspondant à la même longueur d'onde.

11. Système de poursuite de cible selon l'une des revendications précédentes, caractérisé en ce que tous les capteurs de distance sont passifs ou peuvent être coupés à des fins de camouflage et en ce qu'au moins deux récepteurs de capteur d'angle sont suffisamment éloignés l'un de l'autre dans l'espace pour que leur éloignement par rapport à la cible puisse se déterminer par triangulation.

12. Système de poursuite de cible selon l'une des revendications précédentes, caractérisé en ce que la fiabilité d'une composante de signal de capteur est appréciée entre autre par la comparaison de son résidu avec sa variance, et en ce qu'au moins pour l'estimateur de cible (Ze), le résidu d'une composante de signal de capteur, non fiable, est remplacé par zéro et en ce que tous les éléments de la colonne de la matrice (Mai) du multiplicateur (Mui) qui correspond à une composante non fiable du signal de capteur avec un résidu n'ayant pas disparu, est mise égale à zéro.

FIG. 1

FIG. 2a

ez — R — r — Se — es = ez

0 — R — r — SYSTEM MINUS R — e = 0

FIG. 2b

$$P_a = \frac{1}{\pi} \, \text{arc cos} \left( \frac{-1}{\sqrt{1+(2q)^2}} \right)$$

FIG. 3

WAHRSCHEINLICHKEIT $P_a$

QUOTIENT q DER STANDARDABWEICHUNGEN